# EUROPÄISCHE PATENTSCHRIFT

(11) **EP 1 228 440 B1**
(45) Veröffentlichungstag und Bekanntmachung des Hinweises auf die Patenterteilung: **05.04.2017**
(21) Anmeldenummer: 00943684.1
(22) Anmeldetag: 13.06.2000
(51) Int. Cl.: G06F 9/45, G06F 15/78

(54) **SEQUENZ-PARTITIONIERUNG AUF ZELLSTRUKTUREN**
SEQUENCE PARTITIONING IN CELL STRUCTURES
PARTIONNEMENT DE SÉQUENCES DANS DES STRUCTURES CELLULAIRES

(30) Priorität: 10.06.1999 DE 19926538; 09.01.2000 DE 10000423; 12.04.2000 DE 10018119
(43) Veröffentlichungstag der Anmeldung: 07.08.2002
(73) Patentinhaber: PACT XPP Technologies AG, 80807 Munich (DE)
(72) Erfinder: VORBACH, Martin, D-76149 Karlsruhe (DE); NÜCKEL, Armin Dr., D-76777 Neupotz (DE)
(74) Vertreter: Vossius & Partner Patentanwälte Rechtsanwälte mbB
(86) Internationale Anmeldenummer: PCT/DE2000/001869
(87) Internationale Veröffentlichungsnummer: WO 2000/077652

(56) Entgegenhaltungen:
- DE-A- 19 651 075
- FERRANTE J ET AL: "The program dependence graph and its use in optimization" ACM TRANSACTIONS ON PROGRAMMING LANGUAGES AND SYSTEMS, JULY 1987, USA, [Online] Bd. 9, Nr. 3, Seiten 319-349, XP002156651 ISSN: 0164-0925 ACM Digital Library Gefunden im Internet: <URL:http://www.acm.org/pubs/articles/jour nals/toplas/1987-9-3/p319-ferrante/p319-fe rrante.pdf> [gefunden am 2000-12-22]
- HWANG L J ET AL: "Min-cut replication in partitioned networks" IEEE TRANSACTIONS ON COMPUTER-AIDED DESIGN OF INTEGRATED CIRCUITS AND SYSTEMS, [Online] Bd. 14, Nr. 1, Januar 1995 (1995-01), Seiten 96-106, XP000532228 usa ISSN: 0278-0070 IEEE Xplore Gefunden im Internet: <URL:http://ieeexplore.ieee.org/iel1/43/83 22/00363121.pdf> [gefunden am 2000-12-22]
- SCHMIT H: "Incremental reconfiguration for pipelined applications", FIELD-PROGRAMMABLE CUSTOM COMPUTING MACHINES, 1997. PROCEEDINGS., THE 5TH ANNUAL IEEE SYMPOSIUM ON NAPA VALLEY, CA, USA 16-18 APRIL 1997, LOS ALAMITOS, CA, USA,IEEE COMPUT. SOC, US, 16 April 1997 (1997-04-16), pages 47-55, XP010247467, DOI: 10.1109/FPGA.1997.624604 ISBN: 978-0-8186-8159-2

## Beschreibung

### Aufgabe der Erfindung und Anwendungsbereiche

Die vorliegende Erfindung erstreckt sich auf das Gebiet von programmierbaren und insbesondere während des Betriebes umprogrammierbaren arithmetischen und/oder logischen Bausteinen (VPUs) mit Vielzahl von arithmetischen und/oder logischen Einheiten, deren Verschaltung ebenfalls programmierbar und während des Betriebes umprogrammierbar ist. Derartige logische Bausteine sind unter dem Oberbegriff FPGA von verschiedenen Firmen verfügbar. Weiterhin sind mehrere Patente veröffentlicht, die spezielle arithmetische Bausteine mit automatischer Datensynchronisation und verbesserter arithmetischen Datenverarbeitung offenlegen.

Sämtliche beschriebene Bausteine besitzen eine zwei- oder mehrdimensionale Anordnung von logischen und/oder arithmetischen Einheiten (PAEs), die über Bussysteme miteinander verschaltbar sind.

Kennzeichnend für die der Erfindung entsprechenden Bausteine ist, daß sie entweder die nachfolgend aufgelisteten Einheiten besitzen, oder zur erfindungsgemäßen Anwendung diese Einheiten programmiert oder (auch extern) hinzugefügt werden:
1. mindestens eine Einheit (CT) zum Laden der Konfigurationsdaten.
2. PAEs.
3. mindestens ein Interface (IOAG) zu einem oder mehreren Speichern und/oder peripheren Geräten.

Aufgabe der Erfindung ist es, ein Programmierverfahren zur Verfügung zu stellen, das es ermöglicht die beschriebenen Bausteine in gewöhnlichen Hochsprachen effizient zu programmieren und dabei die Vorteile der durch die Vielzahl von Einheiten entstehende Parallelität der beschriebenen

Bausteine weitgehend automatisch, vollständig und effizient zu nutzen.

### Stand der Technik

Aus J. Ferrante et al. "The Program dependence graph and its use in optimization", ACM Transactions on Programming Languages", Juli 1987, USA [online] Bd. 9 Nr. 3 S. 319-349 ist eine intermediäre Programmdarstellung bekannt, die sowohl die Kontroll- wie auch die Datenabhängigkeiten für jede Operation eines Programms explizit macht. Die Möglichkeiten, damit Schleifena.bwicklungen und dergl. durchzuführen, werden erörtert. Die Verwendung der intermediären Programmdarstellung für Parallelmaschinen wird angesprochen.

Aus J. Hwang et al. "Min-Cut Replication in partitioned networks", IEEE Transactions on Computer-Aided Design of Integrated Circuits and Systems 2 Bd.14 Nr. 1, Januar 1985, Seiten 96-106, ist bekannt, dass zur Graphpartitionierung eine Knotenreplikation kantenreduzierend eingesetzt werden kann.

Aus SCHMIT H: "Incremental reconfiguration for pipelined applications", FIELD-PROGRAMMABLE CUSTOM COMPUTING MACHINES, 1997. PROCEEDINGS., THE 5TH ANNUAL IEEE SYMPOSIUM ON NAPA VALLEY, CA, USA 16-18 APRIL 1997, LOS ALAMITOS, CA, USA,IEEE COMPUT. SOC, US, 16. April 1997 (1997-04-16), Seiten 47-55, XP010247467 001: 10.11 09/FPGA.1997.624604 ISBN: 978-0-8186-8159-2 ist die Implemetierung von pipelineartigen Anwendungen für Laufzeitrekonfigurationen bekannt. Zwischenergebnisse sollen nach diesem Dokument gepeichert werden.

Bausteine der einleitend genannten Art werden zumeist unter Verwendung gewöhnlicher Datenflusesprachen programmiert. Dabei treten zwei grundlegende Probleme auf:
1. Die Programmierung in Datenflusssprachen ist für Programmierer gewöhnungsbedürftig, tief sequentielle Aufgaben lassen sich nur sehr umständlich beschreiben.
2. Große Applikationen und sequentielle Beschreibungen lassen sich mit den bestehenden Übersetzungsprogrammen (Synthese-Tools) nur bedingt auf die gewünschte Zieltechnologie abbilden (synthetisieren).

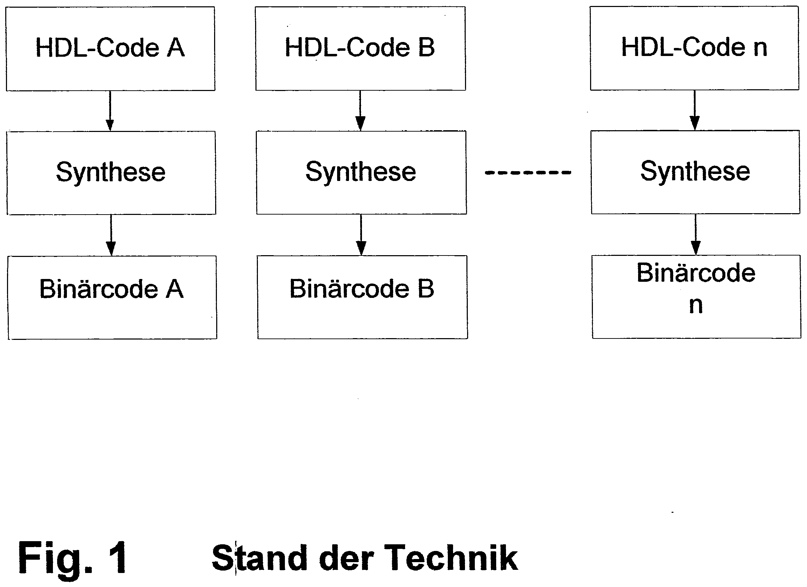

Für gewöhnlich werden Applikationen in mehrere Teilapplikationen partitioniert, die dann einzeln auf die Zieltechnologie synthetisiert werden (Fig. 1). Die einzelnen Binärcodes werden dann auf jeweils einen Baustein geladen. Wesentliche Voraussetzung der Erfindung ist das in DE 44 16 881 beschriebene Verfahren, das es ermöglicht, mehrere partitionierte Teilapplikationen innerhalb eines Bausteines zu nutzen, indem die zeitliche Abhängigkeit analysiert wird und über Steuersignale sequentiell die jeweils erforderlichen Teilapplikationen bei einer übergeordneten Ladeeinheit angefordert und von dieser daraufhin auf den Baustein geladen werden.

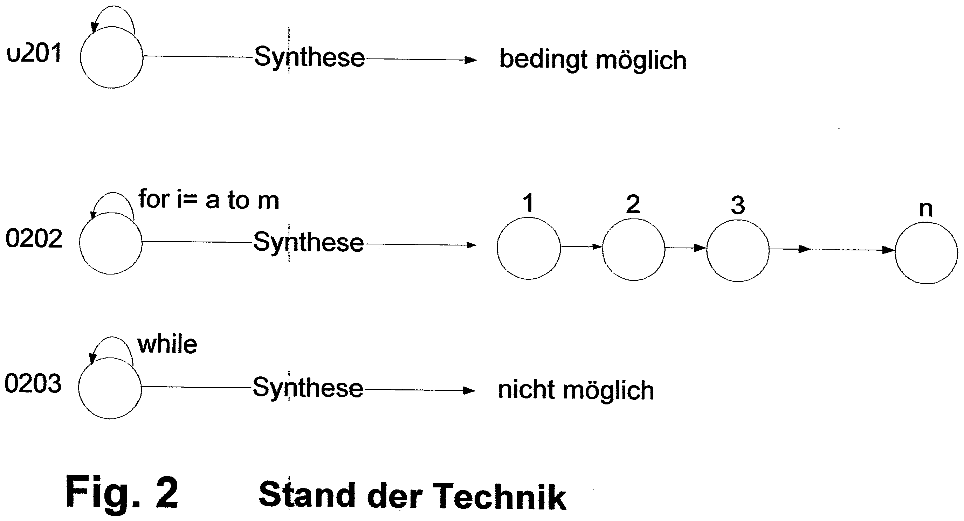

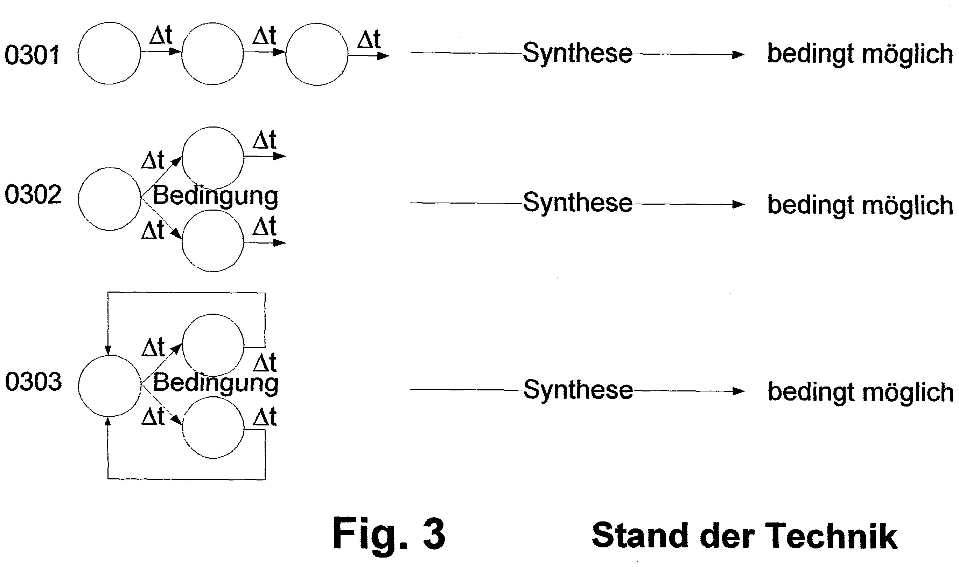

Existierende Synthese-Tools sind nur bedingt in der Lage, Programm-Schleifen auf Bausteine abzubilden (Fig. 2 0201).

Dabei werden **FOR**-Schleifen (0202) als Primitiv-Schleife häufig noch dadurch unterstützt, daß die Schleife vollkommen auf die Ressourcen des Zielbausteines ausgewalzt werden.

**WHILE**-Schleifen (0203) besitzen im Gegensatz zu FOR-Schleifen keinen konstanten Abbruchswert. Vielmehr wird durch eine Bedingung evaluiert, wann der Schleifenabbruch stattfindet. Daher ist gewöhnlicherweise (wenn die Bedingung nicht konstant ist) zur Synthesezeit nicht bekannt, wann die Schleife abbricht. Durch das dynamische Verhalten können Synthese-Tools diese Schleifen nicht fest auf Hardware abgebildet d.h. auf einen Zielbaustein übertragen werden.

**Rekursionen** sind mit Synthesewerkzeugen nach dem Stand der Technik grundsätzlich nicht auf Hardware abbildbar, wenn die Rekursionstiefe nicht zur Synthesezeit bekannt und damit konstant ist. Bei der Rekursion werden mit jeder neuen Rekursionsebene neue Ressourcen allokiert. Das würde bedeuten, daß mit jeder Rekursionsebene neue Hardware zur Verfügung gestellt werden muß, was aber dynamisch nicht möglich ist.

Selbst einfache Grundstrukturen sind von Synthesetools nur dann abbildbar, wenn der Zielbaustein ausreichend groß ist, d.h. ausreichende Ressourcen bietet.
Einfache zeitliche Abhängigkeiten (0301) werden durch heutige Synthese-Tools nicht in mehrere Teilapplikationen partitioniert und sind deshalb nur als Ganzes auf einen Zielbaustein übertragbar.
Bedingte Ausführungen (0302) und Schleifen über Bedingungen (0303) sind ebenfalls nur abbildbar, wenn ausreichende Ressourcen auf dem Zielbaustein existieren.

### Erfindungsgemäßes Verfahren

Die Aufgabe wir durch ein Verfahren gemäß dem unabhängigen Anspruch 1 gelöst.

Durch das in DE 44 16 881 beschriebene Verfahren ist es möglich Bedingungen zur Laufzeit innerhalb der Hardwarestrukturen der genannten Bausteine zu erkennen und derart dynamisch darauf zu reagieren, daß die Funktion der Hardware entsprechend der eingetretenen Bedingung modifiziert wird, was im wesentlichen durch das Konfigurierten einer neuen Struktur geschieht.

Ein wesentlicher Schritt in dem erfindungsgemäßen Verfahren ist die Partitionierung von Graphen (Applikationen) in zeitlich unabhängige Teilgraphen (Teilapplikationen).

Der Begriff "zeitliche Unabhängigkeit" wird damit definiert, daß die Daten, die zwischen zwei Teilapplikationen übertragen werden durch einen Speicher, gleich welcher Ausgestaltung (also auch mittels einfacher Register), entkoppelt werden. Dies ist besonders an den Stellen eines Graphen möglich, an denen eine klare Schnittstelle mit einer begrenzten und möglichst minimalen Menge von Signalen zwischen den beiden Teilgraphen besteht.

Weiterhin sind besonders Stellen im Graphen geeignet, die folgende Merkmale aufweisen:
1. Es befinden sich wenig Signale oder Variablen zwischen den Knoten.
2. Es werden wenig Daten über die Signale oder Variablen übertragen.
3. Es gibt keine Rückkopplungen, d.h. keine Signale oder Variablen die umgekehrte Richtung zu den Restlichen laufen.

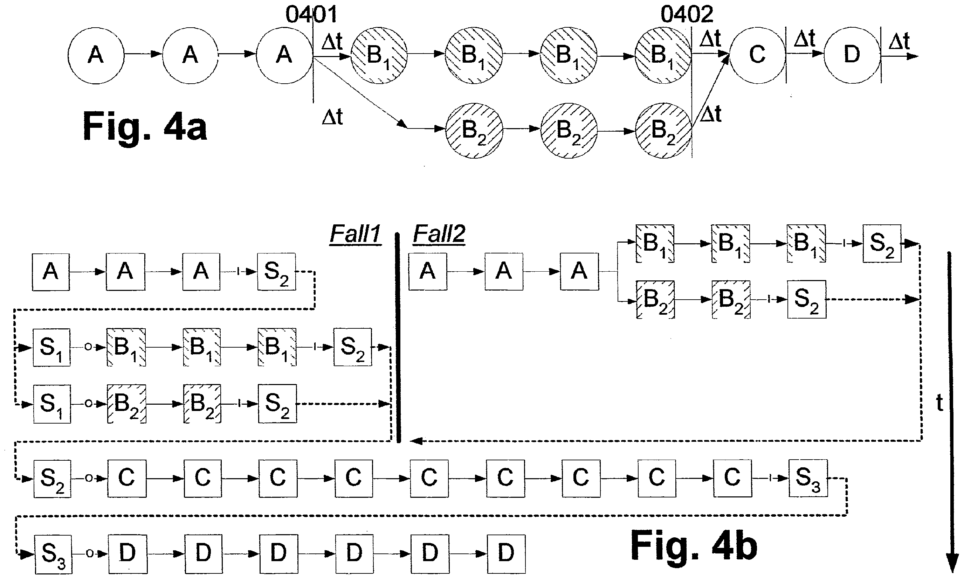

Die zeitliche Unabhängigkeit kann in großen Graphen durch das gezielte Einfügen von klar definierten und möglichste einfachen Schnittstellen zum Speichern von Daten in einen Zwischenspeicher herbeigeführt werden (vgl. Sₙ in Fig. 4).

Schleifen weisen oftmals eine starke zeitliche Unabhängigkeit zum restlichen Algorithmus auf, da sie lange Zeit über einer bestimmten Menge von (zumeist) in der Schleife lokalen Variablen arbeiten und nur beim Schleifeneintritt und beim Verlassen der Schleife eine Übertragung der Operanden bzw. des Ergebnisses erfordern.

Durch die zeitliche Unabhängigkeit wird erreicht, daß nach der vollständigen Ausführung einer Teilapplikation die nachfolgende Teilapplikation geladen werden kann, ohne daß irgendwelche weiteren Abhängigkeiten oder Einflüsse auftreten. Beim Speichern der Daten in den genannten Speicher kann ein Status-Signal (Trigger, vgl. PACT08) generiert werden, das die übergeordneten Ladeeinheit zum Nachladen der nächsten Teilapplikation auffordert. Der Trigger kann bei der Verwendung von einfachen Registern als Speicher immer generiert werden, wenn das Register beschrieben wird. Bei der Verwendung von Speichern, i.b. von solchen die nach dem FIFO-Prinzip arbeiten, ist die Generierung des Triggers von mehreren Bedingungen abhängig. Folgende Bedingungen können beispielsweise einzeln oder kombiniert ein Trigger erzeugen:
- Ergebnis-Speicher voll
- Operanden-Speicher leer
- keine neuen Operanden
- Beliebige Bedingung innerhalb der Teilapplikation, generiert durch z.B.
   * Vergleicher (gleich, größer, etc.)
   * Zähler (Überlauf)
   * Addierer (Überlauf)

Eine Teilapplikation wird im folgenden auch Modul genannt, um die Verständlichkeit aus Sicht der klassischen Programmierung zu erhöhen. Aus demselben Grund werden Signale im folgenden auch Variablen genannt. Dabei unterscheiden sich diese Variablen in einem Punkt wesentlich von herkömmlichen Variablen: Jeder Variable ist ein Statussignal (Ready) zugeordnet, das anzeigt, ob diese Variable einen gültigen Wert besitzt. Wenn ein Signal einen gültigen (berechneten) Wert besitzt, ist das Statussignal Ready; wenn das Signal keinen gültigen Wert besitzt (Berechnung noch nicht abgeschlossen), ist das Statussignal Not_Ready. Das Prinzip ist ausführlich in der Patentanmeldung P196 51 075.9 beschrieben.

Zusammenfassend kann den Triggern folgende Funktionen zugeordnet werden:
1. Steuerung der Datenverarbeitung als Status einzelner PAEs'
2. Steuerung der Umkonfiguration der PAEs (zeitliche Abfolge der Teilapplikationen)
Insbesondere die Abbruchkriterien von Schleifen (WHILE) und Rekursionen, sowie bedingte Sprünge in Teilapplikationen werden von Triggern realisiert.
In Fall 1 werden die Trigger zwischen PAEs ausgetauscht, in Fall 2 werden die Trigger von den PAEs zur CT gesendet. Wesentlich an der Erfindung ist, daß der Übergang zwischen Fall 1 und 2 im wesentlichen von der Anzahl der gerade laufenden Teilapplikationen in der Matrix von PAEs abhängt. Mit anderen Worten, Trigger werden zu den Teilapplikationen gesendet, die auf den PAEs aktuell ausgeführt werden. Ist eine Teilapplikation nicht konfiguriert, so werden die Trigger an die CT gesendet. Wichtig dabei ist: Wäre auch diese Teilapplikation konfiguriert, so würden die entsprechenden Trigger direkt an die entsprechenden PAEs gesendet werden.

Dadurch ergibt sich eine automatische Skalierung der Rechenleistung bei steigender PAE-Größe, bzw. der Kaskadierung mehrerer Matrizen aus PAEs. Es wird keine Umkonfigurationszeit mehr benötigt, sondern die Trigger werden direkt an die nun bereits konfigurierten PAEs gesendet.

### Wave-Reconfiguration

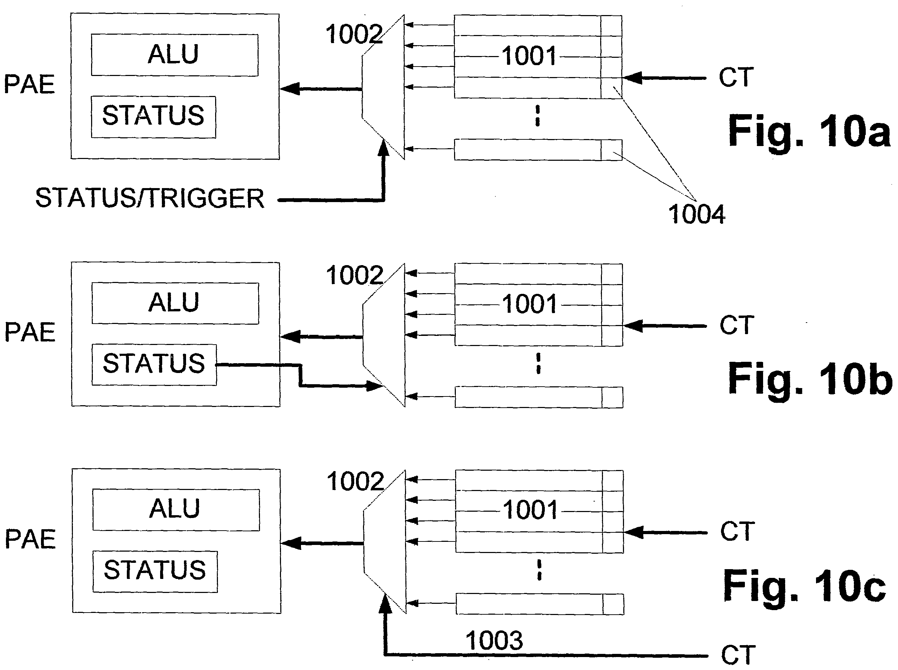

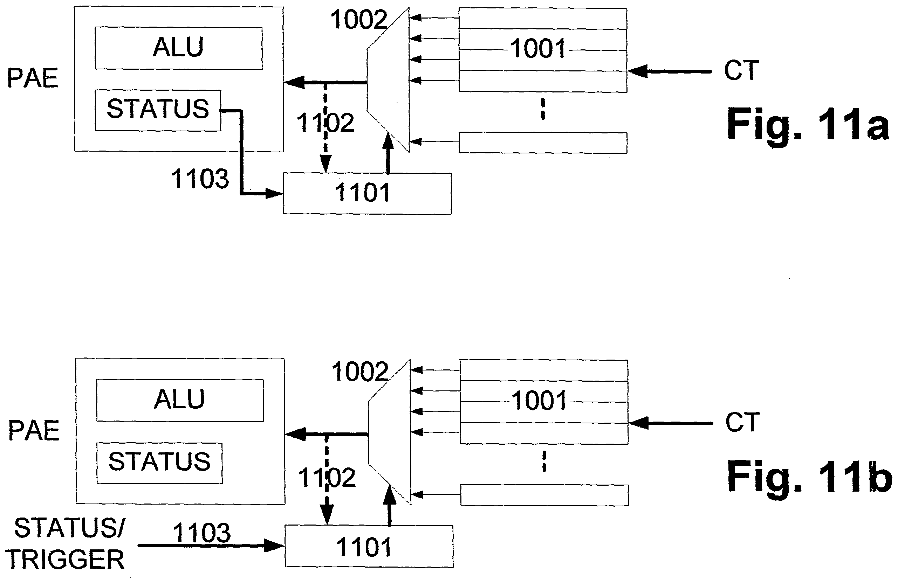

Durch eine geeignete Hardwarearchitektur (vgl. Fig. 10/11) ist es möglich mehrere Module zu überlappen. D.h. mehrere Module sind gleichzeitig in den PAEs vorkonfiguriert und es kann mit minimalem Zeitaufwand zwischen den Konfigurationen umgeschaltet werden, so daß aus einer Menge von mehreren Konfigurationen pro PAE immer genau eine Konfiguration aktiviert ist.

Wesentlich ist, daß dabei in einer Menge von PAEs in die ein Modul A und B vorkonfiguriert ist, ein Teil der Menge mit einem Teil von A und eine anderer Teil der Menge gleichzeitig mit einem Teil B aktiviert sein kann. Dabei ist die Trennung der beiden Teile exakt durch die PAE gegeben, in der der Umschaltezustand zwischen A und B auftritt. Das bedeutet, daß ausgehend von einem bestimmten Zeitpunkt bei allen PAEs bei denen vor diesem Zeitpunkt A zur Ausführung aktiviert war B aktiviert ist und bei allen anderen PAEs nach diesem Zeitpunkt immer noch auf A aktiviert ist. Mit steigender Zeit wird bei immer mehr PAEs B aktiviert.

Die Umschaltung erfolgt aufgrund von bestimmten Daten, Zuständen die sich aus der Berechnung der Daten ergeben oder aufgrund beliebiger anderer Ereignisse, die beispielsweise von extern oder der CT generiert werden.

Das bewirkt, daß direkt nach Verarbeitung eines Datenpaketes zu einer anderen Konfiguration umgeschaltet werden kann. Gleichzeitig/Alternativ kann ein Signal (RECONFIG-TRIGGER) an den CT gesendet werden, das das Vorladen von neuen Konfigurationen durch den CT bewirkt. Das Vorladen kann dabei auf anderen von der aktuellen Datenverarbeitung abhängigen oder unabhängigen PAEs erfolgen. Durch eine Entkopplung der aktiven Konfiguration von den zur Unkonfiguration zur Verfügung stehenden Konfigurationen (vgl. Fig. 10/11) können auch gerade arbeitende (aktive) PAEs, insbesondere auch die PAE, die den RECONFIG-TRIGGER erzeugte, mit neuen Konfigurationen geladen werden. Dies ermöglicht eine mit der Datenverarbeitung überlappende Konfiguration.

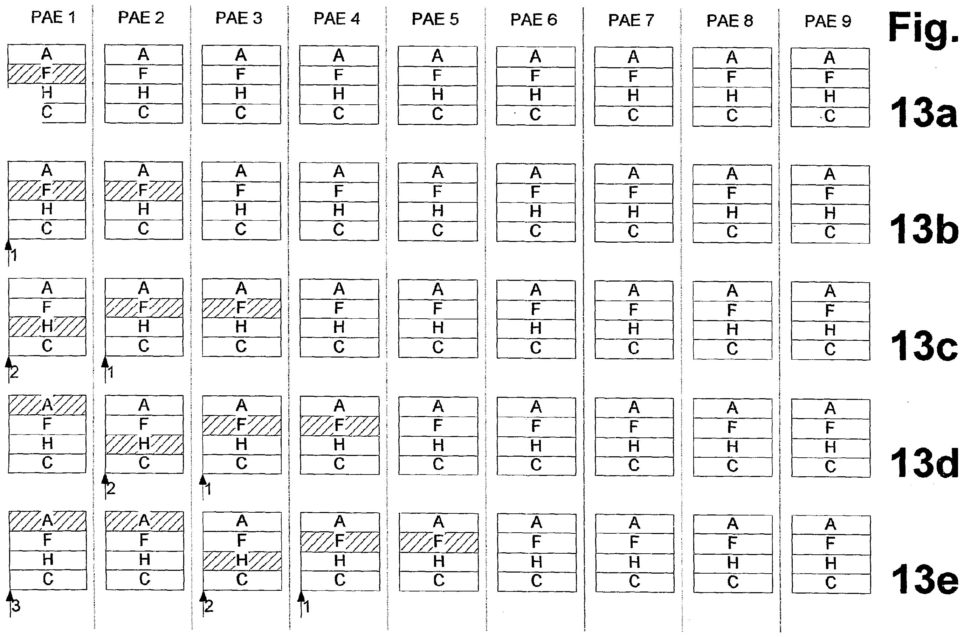

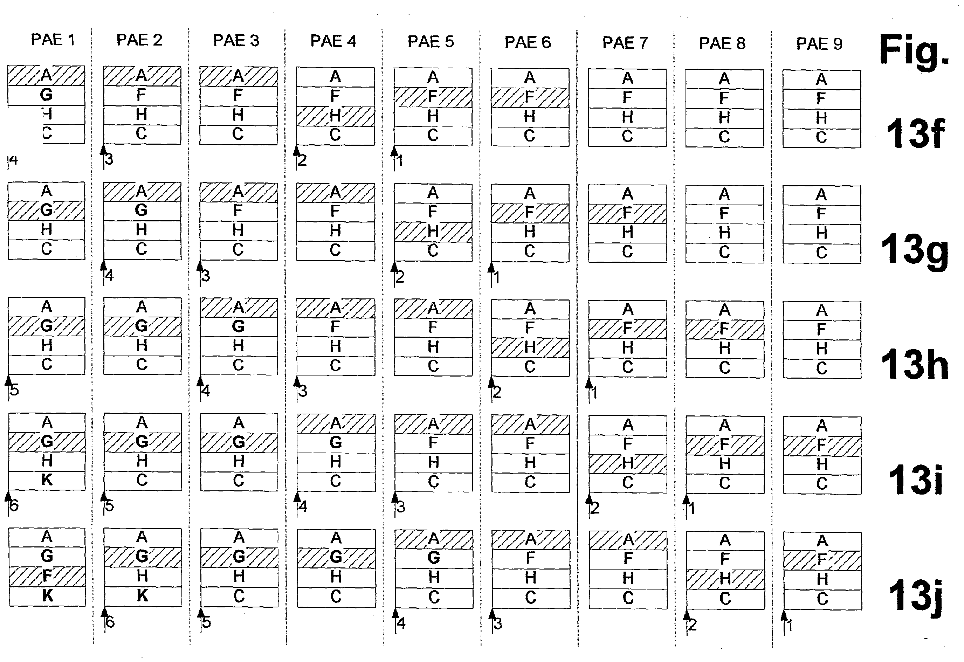

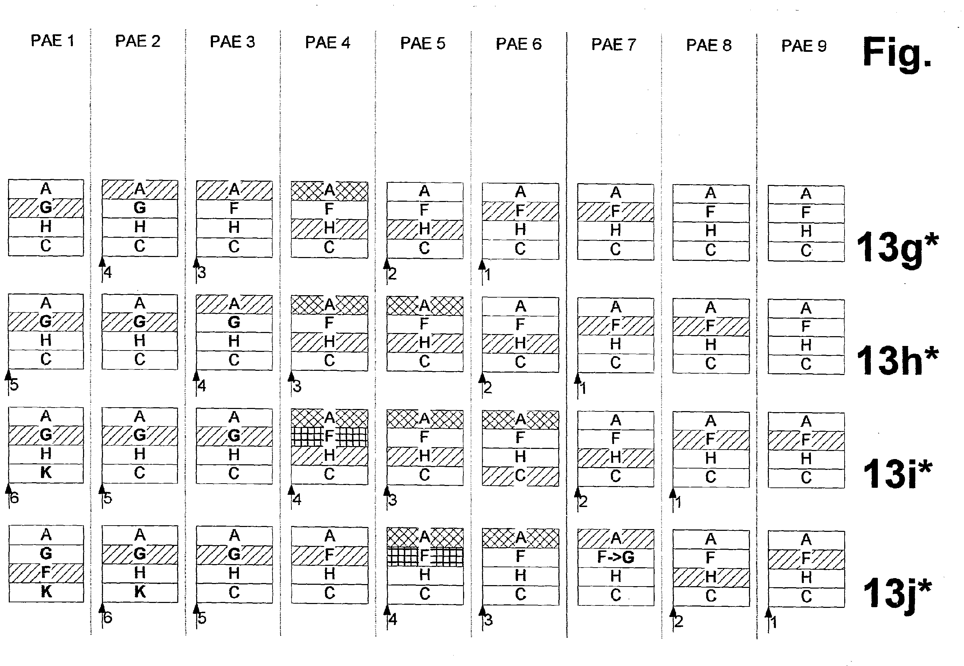

In Figur 13 ist das Grundprinzip der Wave-Reconfiguration (WRC) dargestellt. Dabei wird von einer Reihe von PAEs (PAE1-9) ausgegangen, durch die die Daten pipelineähnlich laufen. Es wird ausdrücklich darauf hingewiesen, daß WRC nicht auf Pipelines beschränkt ist und die Vernetzung und Gruppierung der PAEs jede beliebige Form annehmen kann. Die Darstellung wurde jedoch gewählt um ein einfaches Beispiel zum besseren Verständnis zu zeigen.
In Fig. 13a läuft ein Datenpaket in die PAE1. Die PAE besitzt 4 mögliche Konfigurationen (A, F, H, C), die durch eine geeignete Hardware (vgl. Fig. 10/11) wählbar sind. Die Konfiguration F ist in in PAE1 für das aktuelle Datenpaket aktiviert (schraffiert dargestellt).
Im nächsten Takt läuft das Datenpakt nach PAE2 und ein neues Datenpaket erscheint in PAE1. Auch in PAE2 ist F aktiv. Zusammen mit dem Datenpaket erscheint ein Ereignis (↑1) bei PAE1. Das Ergnis entsteht durch Eintreffen eines beliebigen Ereignisses von aussen bei der PAE (z.B. eines Statusflags oder Triggers) oder wird innerhalb der PAE durch die ausgeführte Berechnung generiert.
In Fig. 13c wird in PAE1 aufgrund des Ereignisses (↑1) die Konfiguration H aktiviert, gleichzeitig erscheint ein neues Ereignis (↑2), das im nächsten Takt (Fig. 13d) die Aktivierung von Konfiguration A bewirkt.

In Fig. 13e trifft (↑3) bei PAE1, die das Überschreiben von F mit G bewirkt (Fig. 13f). Durch das Eintreffen von (↑4) wird G aktiviert (Fig. 13g). (↑5) bewirkt das Laden von K anstelle von C (Fig 13h,i) und (↑6) lädt und startet F anstelle von H (Fig. 13j).

In den Figuren 13g*) bis 13j*) wird verdeutlicht, daß beim Durchlaufen einer Wave-Reconfiguration nicht alle PAEs nach demselben Muster arbeiten müssen. Wie eine PAE von einer Wave-Reconfiguration konfiguriert wird, ist prinzipiell abhängig von ihrer eigenen Konfiguration. Hier soll dargestellt werden, daß PAE4 bis PAE6 derart konfiguriert sind, daß sie anders auf die Ereignisse reagieren, als die übrigen PAEs. Beispielsweise wird in Fig. 13g*) aufgrund von Ereignis ↑2 nicht A sondern H aktiviert (vgl. Fig. 13g). Dasselbe gilt für 13h*). Aufgrund von Ereignis ↑3 wird in Fig. 13i*) nicht G geladen, sondern die Konfiguration F bleibt bestehen und A bleibt aktiviert. In Fig. 13j*) ist bei PAE7 angedeutet, daß Ereignis ↑3 wieder das Laden von G auslösen wird. In PAE4, bewirkt das Ereignis ↑4 das Aktivieren von F anstatt der Konfiguration G (vgl. Fig. 13j).

In Fig. 13 bewegt sich eine Welle von Umkonfigurationen aufgrund von Ereignissen durch eine Menge von PAEs, die 2- oder mehrdimensional ausgestaltet sein kann.
Es ist nicht zwingend notwendig, daß eine einmal stattfindende Umkonfiguration durch die gesamten Fluß hinweg stattfindet. Beispielsweise könnte die Umkonfiguration mit der Aktivierung von A aufgrund des Ereignisses (↑2) nur lokal in den PAEs1 bis 3 und PAE7 stattfinden, während in allen anderen PAEs weiterhin die Konfiguration H aktiviert bleibt.
Mit anderen Worten:
a) Es ist möglich, daß ein Ereigniss nur lokal auftritt und daher nur lokal eine Umaktivierung zur Folge hat,
b) ein globales Ereignis, hat möglicherweise keine Auswirkung auf manche PAEs; abhängig vom ausgeführten Algorithmus.

Bei den PAEs die nach (↑2) weiterhin H aktiviert halten, kann selbstverständlich das Eintreffen des Ereignisses (↑3) vollkommen andere Auswirkungen haben, (I) wie etwa das Aktivieren von C statt dem Laden von G, (ii) andererseits könnte (↑3) auf diese PAEs auch gar keinen Einfluß haben.

### Das Prozessormodell

Die in den folgenden Figuren gezeigten Graphen besitzen als Graphenknoten immer in Modul, wobei davon ausgegangen wird, daß mehrere Module auf einen Zielbaustein abgebildet werden können. Das heißt, obwohl alle Module zeitlich voneinander unabhängig sind, wird nur bei den Modulen eine Umkonfiguration durchgeführt, und/oder ein Datenspeicher eingefügt, die mit einem vertikalen Strich und Δt markiert sind. Dieser Punkt wird Umkonfigurationszeitpunkt genannt.
Der Umkonfigurationszeitpunkt ist abhängig von den bestimmten Daten oder den Zuständen die sich aus der Verarbeitung der bestimmten Daten ergeben.

Das bedeutet zusammenfassend:
1. Große Module können an geeigneten Stellen partitioniert werden und in kleine zeitlich voneinander unabhängige Module zerlegt werden, die optimal in das Array aus PAEs passen.
2. Bei kleinen Modulen die gemeinsam auf einen Zielbaustein abgebildet werden können, wird auf die zeitliche Unabhängigkeit verzichtet. Dadurch werden Konfigurationsschritte eingespart und die Datenverarbeitung beschleunigt.
3. Die Umkonfigurationszeitpunkte werden entsprechend der Ressourcen der Zielbausteine positioniert. Dadurch ist eine beliebige Skalierung der Graphenlänge gegeben.
4. Module können überlagert konfiguriert werden.
5. Die Umkonfiguration von Modulen wird durch die Daten selbst oder dem Ergebnis der Verarbeitung der Daten gesteuert.
6. Die von den Modulen generierten Daten werden gespeichert und die zeitlich nachfolgenden Module lesen die Daten aus diesem Speicher aus und speichern die Ergebnisse wiederum in einen Speicher oder geben das Endergebnis an die Peripherie aus.

### Die Zustandsinformationen des Prozessormodells

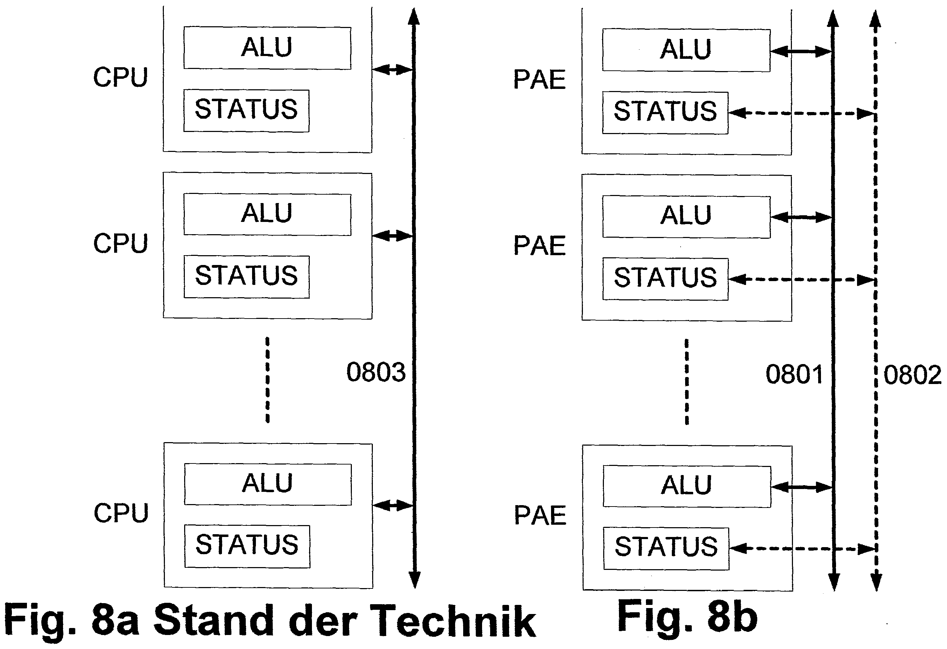

Zur Bestimmung der Zustände innerhalb eines Graphen werden die Statusregister der einzelnen Zellen (PAEs) über ein zusätzlich zum Datenbus (0801) existierendes, frei rout- und segmentierbares Status-Bussystem (0802) allen anderen Rechenwerken zur Verfügung gestellt (Fig. 8b). Das bedeutet, daß eine Zelle (PAE X) die Statusinformation einer andern Zelle (PAE Y) evaluieren kann und dementsprechend die Daten verarbeitet. Um den Unterschied zu bestehenden Parallelrechnersystemen zu verdeutlichen, ist in Fig. 8a der Stand der Technik angegeben. Dabei ist ein Multiprozessorsystem gezeigt, dessen Prozessoren über einen gemeinsamen Datenbus (0803) miteinander verbunden sind. Ein explizites Bussystem für den synchronen Austausch von Daten und Status existiert nicht.

Mit anderen Worten ausgedrückt, stellt das Netzwerk der Statussignale (0802) ein frei und gezielt verteiltes Statusregister eines einzelnen herkömmlichen Prozessors (oder mehrerer Prozessoren eines SMP-Computers) dar. Der Status jeder einzelnen ALU (bzw. jedes einzelnen Prozessors) und insbesondere jede einzelne Information des Status steht jeweils dem oder den ALUs (Prozessoren) zur Verfügung, die die Information benötigen. Dabei entsteht keine zusätzliche Programm- oder Kommunikationslaufzeit (abgesehen von den Signalllaufzeiten) um die Informationen zwischen den ALUs (Prozessoren) auszutauschen.

Abschließend soll angemerkt werden, daß je nach Aufgabe sowohl der Datenflußgraph, als auch der Kontrollflußgraph entsprechend dem beschriebenen Verfahren behandelt werden kann.

### Virtual Machine Modell

Die Grundlagen der Datenverarbeitung mit VPU-Bausteinen sind entsprechend der vorhergehenden Abschnitte hauptsächlich datenflußorientiert. Um sequentielle Programme mit ordentlicher Leistung abzuarbeiten, ist es jedoch notwendig ein sequentielles Datenverarbeitungsmodell zur Verfügung zu haben. Dabei sind oftmals die Sequenzer in den einzelnen PAEs nicht ausreichend.

Die Architektur von VPUs ermöglicht jedoch grundsätzlich den Aufbau von beliebig komplexen Sequenzern aus einzelnen PAEs. Das bedeuted:
1. Es können komplexe Sequenzer konfiguriert werden, die exakt den Anforderungen des Algorithmus entsprechen.
2. Der Datenfluß kann durch entsprechende Konfiguration, exakt die Rechenschritte des Algorithmus repräsentieren.

Dadurch kann eine Virtuelle Maschine auf VPUs implementiert werden, die insbesondere auch den sequentiellen Anforderungen eines Algorithmus entspricht.

Hauptvorteil der VPU-Architektur ist, daß ein Algorithmus durch einen Compiler so zerteilt werden kann, daß die Datenflußteile extrahiert werden durch einen "optimalen" Datenfluß repräsentiert werden, indem ein angepaßter Datenfluß konfiguriert wird UND die sequentiellen Teile des Algorithmus durch einen "optimalen" Sequenzer repräsentiert werden, indem ein angepaßter Sequenzer konfiguriert wird. Dabei können gleichzeitig mehrere Sequenzer und Datenflüsse auf einer VPU untergebracht werden, ausschließlich abhängig von den zur Verfügung stehenden Ressourcen.

Durch die große Anzahl an PAEs entstehen im Betrieb innerhalb einer VPU sehr viele lokalen Zustände. Bei Taskwechseln oder Unterprogramm-Aufrufen (Interrupts) müssen diese Zustände gesichert werden (vgl. PUSH/POP bei Standardprozessoren). Dies ist jedoch aufgrund der Menge an Zuständen nicht sinnvoll möglich.

Um die Zustände auf eine handhabbare Menge zu reduzieren muß zwischen zwei Arten von Zuständen unterschieden werden:
1. Zustandsinformationen des Maschinenmodells (MACHINE-STATE). Diese Zustandsinformationen sind nur innerhalb der Abarbeitung eines bestimmten Modules gültig und werden auch nur lokal in den Sequenzern und Datenflußeinheiten dieses bestimmten Modules verwendet. D.h. diese MACHINE-STATEs repräsentieren die Zustände, die in Prozessoren nach dem Stand der Technik verdeckt innerhalb der Hardware ablaufen, implizit in den Befehlen und den Verarbeitungsschritten sind und nach Ablauf eines Befehles keine weitere Information für nachfolgende Befehle beinhalten. Derartige Zustände brauchen nicht gesichert zu werden. Bedingung dafür ist, daß Interrupts nur nach kompletter Ausführung aller gerade aktiven Module durchgeführt werden. Stehen Interrupts zur Ausführung an, werden keine neuen Module geladen, sondern nur noch aktive abgearbeitet; ebenfalls werden den aktiven Modulen, soweit es der Algorithmus zuläßt keine neuen Operanden mehr zugeführt. Dadurch wird ein Modul zu einer atomaren nicht unterbrechbaren Einheit, vergleichbar mit einer Instruktion eines Prozessors nach dem Stand der Technik.
2. Zustände der Datenverarbeitung (DATA-STATE). Die datenbezogenen Zustände müssen beim Auftreten eines Interrupts entsprechend den Prozessormodellen nach dem Stand der Technik gesichert und in den Speicher geschrieben werden. Das sind bestimmte notwendige Register und Flags oder - entsprechend der Begriffe der VPU-Technologie - Trigger.

Bei den DATA-STATEs kann die Handhabung je nach Algorithmus weiter vereinfacht werden. Zwei grundlegende Strategien werden im Folgenden nähers erläutert:

### 1. Mitlaufen der Zustandsinformation

Dabei werden alle relevanten und zu einem späteren Zeitpunkt benötigten Zustandsinformationen von einem Modul zum nächsten übertragen, wie es in Pipelines oftmals standardmäßig implementiert ist. Die Zustandsinformationen werden dann zusammen mit den Daten implizit in einem Speicher abgelegt, sodaß die Zustände bei einem Abruf der Daten zugleich zur Verfügung stehen. Ein explizites Handhaben der Zustandsinformationen i.b. mittels PUSH und POP entfällt dadurch, was je nach Algorithmus einerseits zu einer wesentlichen Beschleunigung der Abarbeitung und andererseits zu einer vereinfachten Programmierung führt.

Die Zustandsinformaton kann wahlweise entweder mit dem jeweiligen Datenpaket gespeichert werden, oder nur im Falle eines Interrupts gesichert und besonders gekennzeichnet werden.

### 2. Sichern der Reentry Adresse

Bei der Verarbeitung von großen Datenmengen, die in einem Speicher abgelegt sind, ist kann es sinnvoll sein die Adresse mindestens einer der Operanden des gerade verarbeiteten Datenpaketes mit dem Datenpaket zusammen durch die PAEs zu leiten. Dabei wird die Adresse nicht modifiziert sondern steht beim Schreiben des Datenpaketes in ein RAM als Pointer auf den letzten verarbeiteten Operanden zur Verfügung.

Dieser Pointer kann wahlweise entweder mit dem jeweiligen Datenpaket gespeichert werden, oder nur im Falle eines Interrupts gesichert und besonders gekennzeichnet werden. Insbesondere, wenn sämtliche Pointer auf die Operanden durch eine Adresse (oder eine Gruppe von Adressen) berechnet werden können ist es sinnvoll nur eine Adresse (oder eine Gruppe von Adressen) zu sichern.

### "ULIW"-"UCISC"-Modell

Für das Verständnis dieses (einem Prozessor nach dem Stand der Technik sehr ählichen) Modells ist eine Erweiterung der Betrachtungsweise der Architektur von VPUs erforderlich. Dabei dient das Virtual-Machine Modell als Grundlage.
Das Array aus PAEs (PA) wird als in ihrer Architektur konfigurierbare Recheneinheit betrachtet. Der/die CT(s) stellen eine Ladeeinheit (LOAD-UNIT) für Opcodes dar. Die IOAG(s) übernehmen das Businterface und/oder den Registersatz.

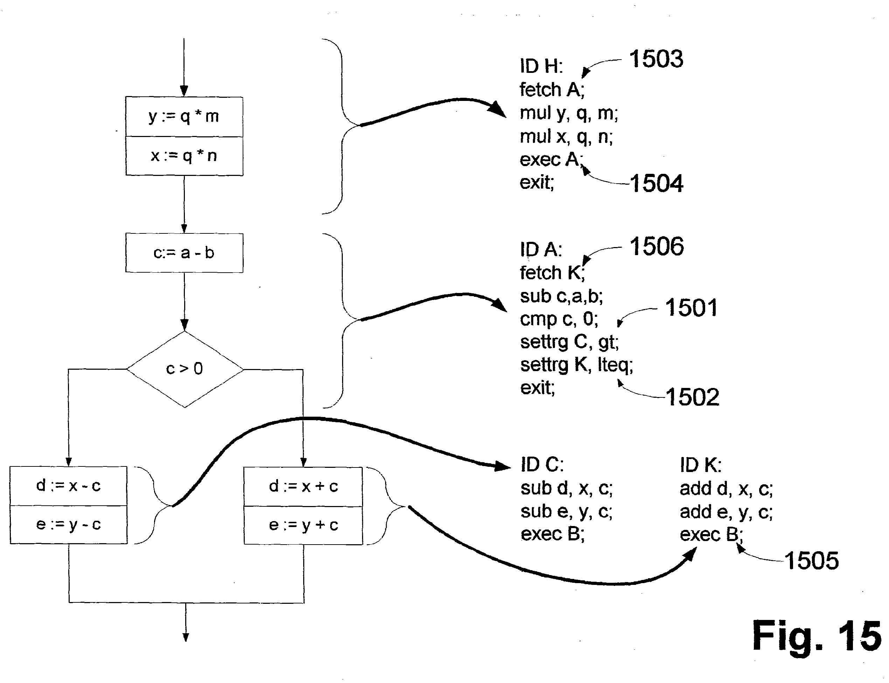

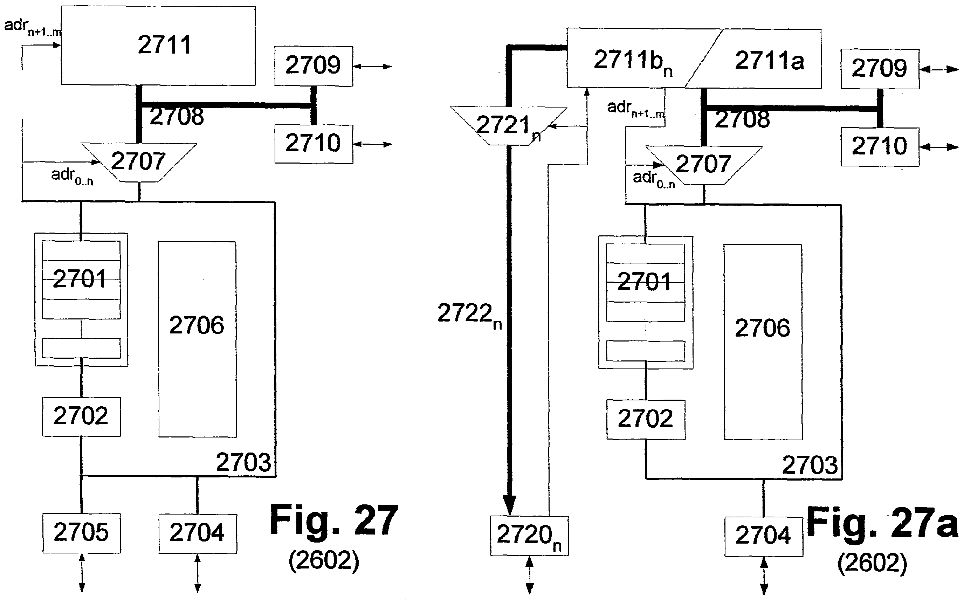

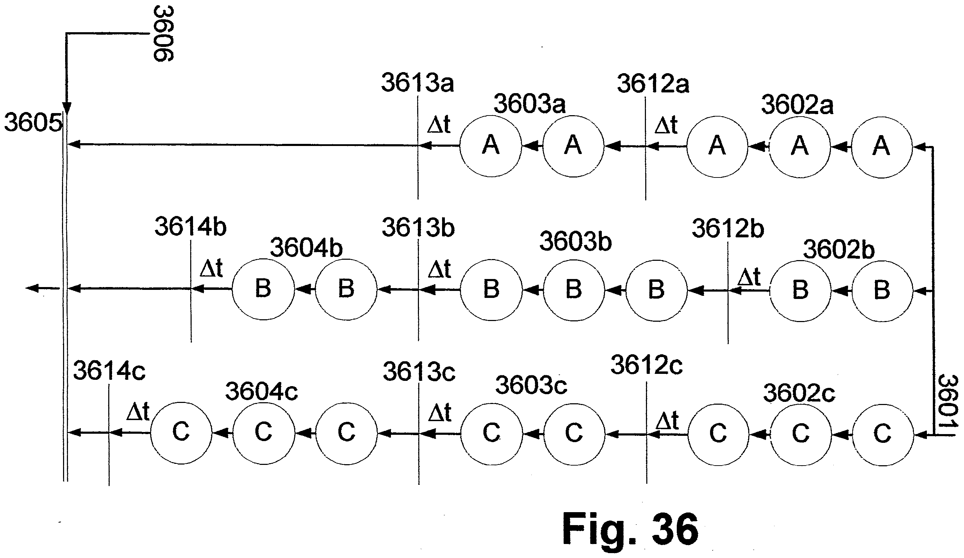

Diese Anordnung ermöglicht zwei grundsätzliche Funktionsweisen, die im Betrieb gemischt verwendbar sind:
1. Eine Gruppe von PAEs (das kann auch eine PAE sein) wird zur Ausführung eines komplexen Befehls oder Befehlsfolge konfiguriert und danach werden die auf diesen Befehl bezogenen Daten (das kann auch ein einziges Datenwort sein) verarbeitet. Danach wird diese Gruppe umkonfiguriert, zur Abarbeitung des nächsten Befehles. Dabei kann sich die Größe und Anordnung der Gruppe ändern. Gemäß den bereits besprochenen Partitionierungstechnologien obliegt es dem Compiler, möglichst optimale Gruppen zu schaffen. Durch den CT werden Gruppen als Befehle auf den Baustein "geladen", dadurch ist des Verfahren mit dem bekannten VLIW vergleichbar, nur daß erheblich mehr Rechenwerke verwaltet werden UND die Vernetzungsstruktur zwischen den Rechenwerken ebenfalls vom Instruktionswort abgedeckt werden kann (Ultra Large Instruction Word = "ULIW"). Dadurch läßt sich ein sehr hoher Instruktion Level Parallelism (ILP) erreichen. (siehe auch Fig 27). Ein Instruktionswort entspricht dabei einem Modul. Mehrere Module können gleichzeitig verarbeitet werden, sofern es die Abhängigkeit der Daten zuläßt und genügend Ressourcen auf dem Baustein frei sind. Wie bei VLIW-Befehlen wird für gewöhnlich nach Ausführen des Instruktionswortes sofort das nächste Instruktionswort geladen. Zur zeitlichen Optimierung ist es dabei möglich das nächste Instruktionswort bereits während der Ausführung vorzuladen (vgl. Fig. 10). Bei mehreren möglichen nächsten Instruktionswörten können mehrere vorgeladen werden und vor der Ausführung wird z.B. durch ein Triggersignal das korrekte Instruktionswort ausgewählt. (siehe Figur 4a B1/B2, Figur 15 ID C/ID K, Figur 36 A/B/C)
2. Eine Gruppe von PAEs (das kann auch eine PAE sein) wird zur Ausführung einer häufig gebrauchten Befehlsfolge konfiguriert. Die Daten, das kann auch hier ein einzelnes Datenwort sein, werden bei Bedarf der Gruppe zugeführt und von der Gruppe empfangen. Diese Gruppe bleibt über eine Vielzahl von Takten ohne Umkonfiguration bestehen. Vergleichbar ist diese Anordnung mit einem speziellen Rechenwerk in einem Prozessor nach dem Stand der Technik (z.B. MMX), das für Spezialaufgaben vorgesehen ist und nur bei Bedarf verwendet wird. Durch diesen Ansatz sind Spezialbefehle entsprechend des CISC-Prinzipes generierbar, mit dem Vorteil, daß diese Befehle anwendungsspezifisch geschaffen werden können (Ultra-CISC = "UCTSC").

### Erweiterung des RDY/ACK-Protokolls (vgl. PACT02)

In PACT02 ist ein RDY/ACK-Standardprotokoll beschrieben, das die wesentlichen Anforderungen gemäß den Synchronisationen von DE 44 16 881 in Hinblick auf eine typische Datenflußapplikation beschreibt. Nachteil des Protokolles ist, daß lediglich Daten gesendet und der Empfang bestätigt werden kann. Der umgekehrte Fall, indem Daten angefordert werden und das Versenden bestätigt wird (im Folgenden REQ/ACK genannt, ist zwar elektrisch mit demselben Zweidrahtprotokoll lösbar, jedoch semantisch nicht erfaßt. Das gilt insbesondere, wenn REQ/ACK und RDY/ACK gemischt betrieben werden.
Daher wird die klare Unterscheidung der Protokolle eingeführt: RDY: Daten liegen beim Versender für den Empfänger bereit REQ: Daten werden vom Empfänger beim Versender angefordert ACK: Allgemeine Bestätigung für erfolgten Emfang oder Versand

(Prinzipiell könnten auch zwischen ACK für ein RDY und einem ACK für ein REQ unterschieden werden, jedoch ist in den Protokollen die Semantik des ACKs für gewöhnlich implizit).

### Speichermodell

In VPUs können Speicher integriert werden (einer oder mehrere), die ähnlich einer PAE angesprochen werden. Es wird im folgenden ein Speichermodell beschrieben, das gleichzeitig ein Interface zu externer Peripherie und/oder externem Speicher darstellt:
Ein VPU-interner Speicher mit PAE-ähnlichen Busfunktionen kann verschiedene Speichermodi darstellen:
   1. Standardspeicher (Random Access)
   2. Cache (als Erweiterung des Standardspeichers)
   3. Lookup-Tabelle
   4. FIFO
   5. LIFO (Stack)

Dem Speicher ist ein steuerbares Interface zugeordnet, das Speicherbereiche wahlweise wort- oder blockweise schreibt oder liest.

Dadurch ergeben sich folgende Nutzungsmöglichkeiten:
1. Entkopplung von Datenströmen (FIFO)
2. Schneller Zugriff auf selektierte Speicherbereiche eines externen Speichers, was eine Cacheähnliche Funktion darstellt (Standardspeicher, Lookup-Tabelle)
3. Stack mit variierbarer Tiefe (LIFO)

Dabei kann das Interface benutzt werden, es ist jedoch nicht zwingend notwendig, wenn die Daten z.B. ausschließlich lokal in der VPU verwendet werden und der Speicherplatz eines internen Speichers ausreicht.

### Stack Modell

Durch Verwendung des REQ/ACK-Protokolls und der internen Speicher im LIFO-Modus kann ein einfacher Stack-Prozessor aufgebaut werden. Dabei werden temporäre Daten von den PAEs auf den Stack geschrieben und bei Bedarf von dem Stack geladen. Die hierfür notwendigen Compilertechnologien sind hinreichend bekannt. Durch die variierbare Stacktiefe, die durch einen Datenaustausch des internen Speicher mit einem externen Speicher erreicht wird, kann der Stack beliebig groß werden.

### Akkumulator Modell

Jede PAE kann eine Recheneinheit nach dem Akkumulatorprinzip darstellen. Wie aus PACT02 bekannt ist es möglich die Ausgangsregister auf den Eingang der PAE rückzukoppeln. Dadurch entsteht ein Akkumulator nach dem Stand der Technik. In Verbindung mit dem Sequenzer nach Fig. 11 lassen sich einfache Akkumulator-Prozessoren aufbauen.

### Register Modell

Durch Verwendung des REQ/ACK-Protokolls und der internen Speicher im Standardspeicher-Modus kann ein einfacher Register-Prozessor aufgebaut werden. Dabei werden die Registeradressen von einer Gruppe von PAEs generiert, während eine andere Gruppe von PAEs die Verarbeitung der Daten übernimmt.

### Architektur des Speichers

Der Speicher besitzt zwei Interface. Ein erstes, das den Speicher mit dem Array verbindet und ein zweites, das den Speicher mit einer IO-Einheit verbindet. Zur Verbesserung der Zugriffszeit sollte der Speicher als Dual-Ported-RAM ausgestaltet sein, wodurch Schreib- und Lesezugriffen unabhängig voneinander erfolgen können.

Das erste Interface ist übliches PAE-Interface (PAEI), das den Zugang zum Bussystem des Arrays gewährleistet, sowie die Synchronisation und Triggerverarbeitung sicherstellt. Trigger können verwendet werden und verschiedene Zustände des Speichers anzuzeigen oder Aktionen im Speicher zu erzwingen, beispielsweise
1. Empty/Full: Beim Einsatz als FIFO wird der FIFO-Zustand "voll", "fast-voll", "leer", "fast-leer" angezeit;
2. Stack overrun/underrun: Beim Einsatz als Stack werden Überlauf und Unterlauf des Stacks signalisiert;
3. Cache hit/miss: Im Cache-Mode wird angezeigt, ob eine Adresse im Cache gefunden wurde;
4. Cache flush: Durch einen Trigger wird das Schreiben des Caches in den externen RAM erzwungen.
Dem PAE-Interface zugeordnet ist eine konfigurierbare Zustandsmaschine, die die verschiedenen Betriebsarten steuert. Der Zustandsmaschine ist ein Zähler zugeordnet um die Adressen im FIFO- und LIFO-Modus zu generieren. Die Adressen werden über einen Multiplexer an den Speicher geführt, damit zusätzlich Adressen, die im Array generiert werden an den Speicher geführt werden können.

Das zweite Interface dient zum Anschluß einer IO-Einheit (IOI). Die IO-Einheit ist als konfigurierbarer Kontroller mit einem externen Interface ausgestaltet. Der Kontroller liest oder schreibt wort- oder blockweise Daten in bzw. aus dem Speicher. Die Daten werden mit der IO-Einheit ausgetauscht. Weiterhin unterstützt der Kontroller mittels eines zusätzlichen TAG-Speichers diverse Cache-Funktionen.

IOI und PAEI sind miteinander synchronisiert, sodaß keine Kollision der beiden Interface eintritt. Die Synchronistation ist je nach Betriebsart unterschiedlich, während beispielsweise im Standardspeicher- oder Stack-Mode immer nur entweder das IOI oder das PAEI auf den gesamten Speicher zugreifen kann, ist im FIFO-Modus die Synchronisation zeilenweise, d.h. während IOI auf eine Zeile x zugreift, kann das PAEI auf jede andere Zeile ungleich x gleichzeitig zugreifen.

Die IO-Einheit wird entsprechend der peripheren Erfordernisse ausgestaltet, beispielsweise:
1. SDRAM Kontroller
2. RDRAM Kontroller
3. DSP-Bus Kontroller
4. PCI Kontroller
5. Serieller Kontroller (z.B. NGIO)
6. Spezial Purpose Kontroller (SCSI, Ethernet, USB, etc.)

Eine VPU kann beliebige Speicherelemente mit beliebigen IO-Einheiten besitzen. Dabei können unterschiedliche IO-Einheiten auf einer VPU implementiert sein.

### Funktionsweise:

### 1. Standardspeicher

### 1.1 intern/lokal

Über das PAEI werden Daten und Adressen mit dem Speicher ausgetauscht. Die adressierbare Speichergröße ist durch die Speichergröße beschränkt.

### 1.2 extern/memory mapped window

Über das PAEI werden Daten und Adressen mit dem Speicher ausgetauscht. Im Kontroller des IOI ist eine Basisadresse im externen Speicher angegeben. Der Kontroller liest blockweise Daten von der externen Speicheradresse und schreibt sie in den Speicher, wobei die internen und externen Adressen jeweils inkrementiert (oder dekrementiert) werden; so lange, bis der gesamte interne Speicher übertragen wurde oder eine voreingestellte Grenze erreicht wurde. Das Array arbeitet mit den lokalen Daten, bis diese vom Kontroller wieder in den externen Speicher geschrieben werden. Das Schreiben verläuft analog dem beschriebenen Lesevorgang.

Das Lesen und Schreiben durch den Kontroller kann
a) durch Trigger angestoßen werden oder
b) durch einen Zugriff des Arrays auf eine nicht lokal gespeicherte Adresse. Greift das Array auf eine derartige Adresse zu, wird zunächst der interne Speicher in den externen geschrieben und danach der Speicherblock um die gewünschte Adresse nachgeladen.

Diese Betriebsart ist besonders für die Implementierung eines Registersatzes für einen Registerprozessor interessant. Durch einen Trigger kann in diesem Fall das Push/Pop des Registersatzes mit dem externen Speicher für einen Taskwechsel oder eine Kontextumschaltung realisiert werden.

### 1.3 extern/lookup table

Die Lookup Tabellen Funktion ist eine Vereinfachung von 1.2. Dabei werden die Daten entweder einmal oder mehrmals durch einen CT-Aufruf oder einen Trigger vom externen RAM in den internen gelesen. Das Array liest Daten aus dem internen Speicher, schreibt jedoch keine Daten in den internen Speicher. Die Basisadresse im externen Speicher ist im Kontroller entweder durch die CT oder das Array gespeichert und kann zur Laufzeit verändert werden. Das Laden aus dem externen Speicher wird entweder von der CT oder durch einen Trigger aus dem Array ausgelöst und kann ebenfalls zur Laufzeit geschehen.

### 1.4 extern/cached

In diesem Modus greift das Array wahlweise auf den Speicher zu. Der Speicher arbeitet wie ein Cache-Speicher für den externen Speicher nach dem Stand der Technik. Durch einen Trigger aus dem Array oder durch die CT kann des leeren des Caches (d.h. das vollständige Schreiben des Caches in den externen Speicher) hervorgerufen werden.

### 2. FIFO

Der FIFO-Modus wird üblicherweise verwendet, wenn Datenströme von extern an die VPU geführt werden. Dann dient der FIFO als Entkopplung zwischen der externen Datenverarbeitung und der VPU-internen Datenverarbeitung, derart daß entweder von extern auf den FIFO geschrieben wird und von der VPU gelesen oder genau umgekehrt. Die Zustände des FIFOs werden durch Trigger zum Array und ggf. auch nach extern signalisiert. Der FIFO selbst wird nach dem Stand der Technik mit unterschiedlichen Schreib- und Lesezeigern implementiert.

### 3. Stack/intern

Durch ein Adressregister wird ein interner Stack aufgebaut. Bei jedem Schreibzugriff auf den Speicher durch das Array wird das Register je nach Mode (a) inkrementiert (b) dekrementiert. Bei Lesezugriffen vom Array aus wird des Register umgekehrt (a) dekrementiert und (b) inkrementiert. Das Register stellt für jeden Zugriff die erforderliche Adresse zur Verfügung. Der Stack ist durch die Größe des Speichers begrenzt. Fehler (Überlauf/Unterlauf) werden durch Trigger angezeigt.

### 4. Stack/extern

Sofern der interne Speicher zu klein für den Aufbau eines Stacks ist, kann er in den externen Speicher ausgelagert werden. Dazu besteht im Kontroller ein Adresszähler für die externe Stackadresse. Wird eine bestimmte Menge an Einträgen im internen Stack überschritten, wird blockweise eine Anzahl von Einträgen auf den externen Stack geschrieben. Der Stack wird vom Ende her, also vom ältesten Eintrag aus nach extern geschrieben, wobei eine Menge von neuesten Einträgen nicht nach extern geschrieben wird, sondern intern verbleibt. Der externe Adresszähler (ERC) wird zeilenweise modifiziert.

Nachdem Platz im internen Stack geschaffen wurde muß der verbleibende Stack-Inhalt an den Beginn des Stacks bewegt werden, die interne Stackadresse wird entsprechend angepaßt.

Eine effizientere Variante ist des Auslegen des Stacks als Ringspeicher (vgl. PACT04). Ein interner Adresszähler wird durch das Hinzufügen oder Entfernen von Stackeinträgen modifiziert. Sobald der interne Adresszähler (IAC) am oberen Ende des Speichers überschreitet, zeigt er auf die unterste Adresse. Unterschreitet der IAC die unterste Adresse, zeigt er auf die oberste. Ein zusätzlicher Zähler (FC) zeigt den Füllstand des Speichers an, d.h. mit jedem geschriebenen Wort wird der Zähler inkrementiert, mit jedem gelesenen dekrementiert. Anhand des FC ist erkennbar, wann der Speicher leer, bzw. voll ist. Diese Technologie ist von FIFOs bekannt. Wird damit ein Block in den externen Speicher geschrieben, reicht die Anpassung des FC um den Stack zu aktualisieren. Ein externer Adresszähler (EAC) zeigt immer auf den ältesten im internen Speicher befindlichen Eintrag und befindet sich damit an dem IAC entgegengesetzten Ende des Stacks. Der EAC wird modifiziert, wenn
(a) Daten auf den externen Stack geschrieben werden, dann läuft er in Richtung des IAC,
(b) Daten vom externen Stack gelesen werden, dann entfernt er sich vom IAC.

Durch Überwachung des FC wird sichergestellt, daß IAC und EAC nicht kollidieren.

Der ERC wird entsprechend der externen Stackoperation (Auf- oder Abbau) modifiziert.

### MMU

Dem externen Speicherinterface kann eine MMU zugeordnet werden, die zwei Funktionen erfüllt:
1. Umrechnung der internen Adressen auf externe Adressen zur Unterstützung moderner Betriebsysteme
2. Überwachung der Zugriffe auf externe Adressen, z.B. generieren eines Fehlersignales als Trigger, wenn der externe Stack über- oder unterläuft.

### Compiler

Das erfindungsgemäße Programmierprinzip der VPU-Technologie besteht darin, sequentiellen Kode zu separieren und in möglichst viele kleine und unabhängige Teilalgorithmen zu zerlegen, während die Teilalgorithmen des Datenflußcodes direkt auf die VPU abgebildet wird.

### Trennung zwischen VPU- und Standart-Kode

Innerhalb einer Sprache nach den Stand der Technik, repräsentativ für alle möglichen Compiler (Pascal, Java, Fortran, etc) soll C++ im weiteren verwendet werden, kann eine spezielle Erweiterung (VC = Vpu C) definiert werden, die die Sprachkonstrukte und Typen enthält, die besonders gut auf eine VPU-Technologie abbildbar sind. VCs dürfen vom Programmierer nur innerhalb von Proceduren oder Functionen verwendet werden, die keine anderen Konstrukte oder Typen verwenden. Diese Proceduren und Functionen sind direkt auf die VPU abbildbar und laufen besonders effizient ab. Der Compiler extrahiert die VC im Präprozessor und gibt sie direkt an das VC-Backend-Processing (VCBP) weiter.

### Extraktion des parallelisierbaren Compiler-Kodes

Im nächsten Schritt analysiert der Compiler die restlichen C++ Codes und extrahiert die Teile (MC = mappable C), die gut parallelisierbar und ohne den Einsatz von Sequenzern auf die VPU-Technologie abbildbar sind. Jedes einzelne MC wird in ein virtuelles Array plaziert und geroutet. Danach wird der Platzbedarf, sowie die zu erwartende Performance analysiert. Dazu wird das VCBP aufgerufen und die einzelnen MC werden zusammen mit den VC, die in jedem Fall abgebildet werden, partitioniert.

Die MCs, deren VPU-Implementierung den höchsten Leistungs-Zuwachs erzielen werden übernommen, die restlichen werden als C++ an die nächste Compilerstufe weitergereicht.

### Optimierender Sequenzern Generator

Diese Compilerstufe ist je nach Architektur des VPU-Systems unterschiedlich implementierbar:

### 1. VPU ohne Sequenzer und externer Prozessor

Sämtliche verbleibenden C++ Kodes werden für den externen Prozessor compiliert.

### 2. Nur VPU mit Sequenzer

### 2.1 Sequenzer in den PAEs

Sämtliche verbleibenden C++ Kodes werden für die Sequenzer der PAEs compiliert.

### 2.2 Konfigurierbare Sequenzer im Array

Der verbleibende C++ Code wird für jedes unabhängige Modul analysiert. Die jeweils am besten geeignete Sequenzer-Variante wird aus einer Datenbank ausgewählt und als VC-Code (SVC) abgelegt. Dieser Schritt ist meist iterativ, d.h. eine Sequenzer-Variante wird ausgewählt, der Code wird compiliert, analysiert und mit dem compilierten Code anderer Sequenzer-Varianten verglichen. Letztlich wird der Objectcode (SVCO) des C++ Codes für den gewählten SVC generiert.

### 2.3 sowohl 2.1 als auch 2.2 werden verwendet

Die Funktionsweise entspricht der von 2.2. Für die Sequenzer in den PAEs bestehen besondere statische Sequenzer-Modelle in der Datenbank.

### 3. VPU mit Sequenzer und externer Prozessor

Auch diese Funktionsweise entspricht 2.2. Für den externen Prozessor existieren besondere statische Sequenzer-Modelle in der Datenbank.

### Linker

Der Linker verbindet die einzelnen Module (VC, MC, SVC und SVCO) zu einem ausführbaren Programm. Dazu verwendet er das VCBP um die einzelnen Module zu plazieren, zu routen und die zeitliche Partitionierung festzulegen. Der Linker fügt ebenfalls die Kommunikationsstrukturen zwischen den einzelnen Modulen hinzu und fügt gegebenenfalls Register und Speicher ein. Aufgrund einer Analyse der Kontrollstrukturen und Abhängigkeiten der einzelnen Module werden Strukturen zum Speichern der internen Zustände des Arrays und der Sequenzer für den Fall einer Reconfiguration hinzugefügt.

### Bemerkungen zu den Prozessormodellen

Die verwendeten Maschinenmodell können innerhalb einer VPU beliebig kombiniert werden. Auch innerhalb eines Algorithmus kann je nach dem, welches Modell optimal ist, zwischen den Modellen gewechselt werden.

Wird einem Register-Prozessor ein weiterer Speicher zugefügt, von dem die Operanden gelesen werden und in den die Ergebnisse geschrieben werden, kann eine Load/Store-Prozessor aufgebaut werden. Dabei können mehrere verschiedene Speicher zugeordnet werden, indem die einzelnen Operanden und das Ergebnis getrennt behandelt wird.
Diese Speicher arbeiten dann quasi als Load/Store-Einheit und stellen eine Art Cache für den externen Speicher dar. Die Adressen werden durch von der Datenverarbeitung separierte PAEs berechnet.

### Pointer Reordering

Hochsprachen wie C/C++ verwenden häufig Pointer, die sehr schlecht durch Pipelines gehandhabt werden können. Wenn ein Pointer erst direkt vor dem Verwenden der Datenstrukturen auf die er zeigt, berechnet wird, kann häufig die Pipeline nicht schnell genug gefüllt werden und die Verarbeitung wird speziell in VPUs ineffizient.

Sicherlich ist es sinnvoll bei der Programmierung von VPUs möglichst keine Pointer zu verwenden, jedoch ist das oftmals nicht möglich.

Die Lösung ist, die Pointerstrukturen durch den Compiler so umzusortieren, daß die Pointeradressen möglichst lange vor deren Verwendung berechnet werden. Gleichzeitig sollte es möglichst wenig direkte Abhängigkeiten zwischen einem Pointer und den Daten auf die er zeigt geben.

### Erweiterungen der PAEs (gegenüber P196 51 075.9 und P196 54 846.2)

Durch P196 51 075.9 und P196 54 846.2 ist der Stand der Technik in Bezug auf die Konfigurationseigenschaften von Zellen (PAEs) definiert.

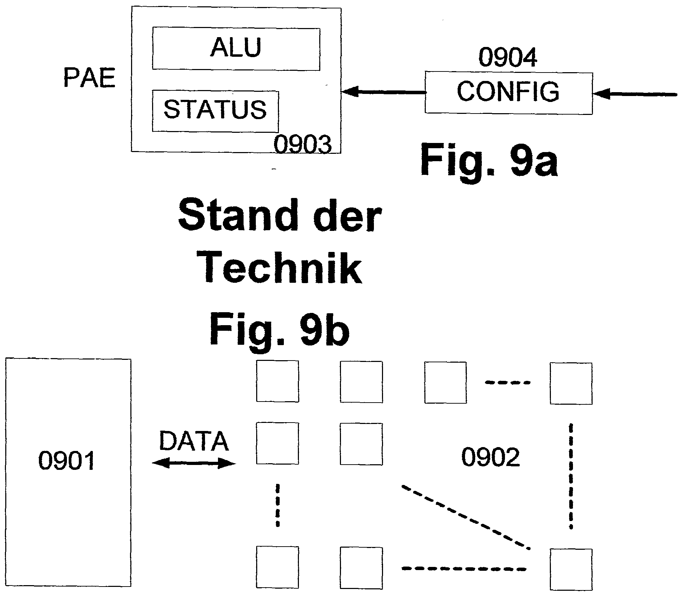

Dabei soll auf zwei Eigenschaften eingegangen werden:
1. Einer PAE (0903) ist gemäß P196 51 075.9 ein Satz von Konfigurationsregistern (0904) zugeordnet, der eine Konfiguration beinhaltet (Fig. 9a).
2. Eine Gruppe von PAEs (0902) kann gemäß P196 54 846.2 auf einen Speicher zum Speichern oder Lesen von Daten zugreifen (Fig. 9b)

### Aufgabe ist es,

a) ein Verfahren zu schaffen, das das Umkonfigurieren von PAEs beschleunigt und zeitlich von der übergeordneten Ladeeinheit entkoppelt, und
b) das Verfahren so auszulegen, daß gleichzeitig die Möglichkeit geschaffen wird über mehrere Konfigurationen zu sequenzen, und
c) gleichzeitig mehrere Konfigurationen in einer PAE zu halten, von denen immer eine aktiviert ist und zwischen verschiedenen Konfigurationen schnell gewechselt werden kann.

### Entkopplung der Konfigurationsregister

Das Konfigurationsregister wird von der übergeordneten Ladeeinheit (CT) entkoppelt (Fig. 10), indem ein Satz von mehreren Konfigurationsregistern (1001) verwendet wird. Immer genau eines der Konfigurationsregister bestimmt selektiv die Funktion der PAE. Die Auswahl des aktiven Registers wird über einen Multiplexer (1002) durchgeführt. In jedes der Konfigurationsregister kann die CT beliebig schreiben, sofern dieses nicht die aktuelle Konfiguration der PAE bestimmt, d.h. aktiv ist. Das Schreiben auf das aktive Register ist prinzipiell möglich, dazu stehen die in PACT10 beschriebenen Verfahren zur Verfügung.

Welches Konfigurationsregister von 1002 selektiert wird kann durch verschiedene Quellen bestimmt werden:
1. Ein beliebiges Status-Signal oder eine Gruppe beliebiger Status-Signale, die über ein Bussystem (0802) an 1002 geführt werden (Fig. 10a). Die Status-Signale werden dabei von beliebigen PAEs generiert oder durch externe Anschlüsse des Bausteins zur Verfügung gestellt (vgl. Fig. 8).
2. Das Status-Signal der PAE, die von 1001/1002 konfiguriert wird, dient zur Selektion (Fig. 10b).
3. Ein von der übergeordneten CT generiertes Signal dient zur Selektion (Fig. 10c).
Dabei ist es möglich wahlweise die eingehenden Signale (1003) mittels eines Registers für einen bestimmten Zeitraum zu speichern und alternativ und wahlweise abzurufen.

Durch den Einsatz mehrere Register wird die CT zeitlich entkoppelt. Das bedeutet, die CT kann mehrere Konfigurationen "vorladen", ohne daß eine direkte zeitliche Abhängigkeit besteht.
Lediglich wenn das selektierte/aktivierte Register in 1001 noch nicht geladen ist, wird mit der Konfiguration der PAE so lange gewartet, bis die CT das Register geladen hat. Um festzustellen, ob ein Register eine gültige Information besitzt kann beispielsweise ein "Valid-Bit" (1004) pro Register eingeführt werden, das von der CT gesetzt wird. Ist 0906 bei einem selektierten Register nicht gesetzt, wird über ein Signal die CT zum schnellstmöglichen Konfigurieren des Registers aufgefordert.

Das in Fig. 10 beschriebene Verfahren ist einfach zu einem Sequenzer erweiterbar (Fig. 11). Dazu wird ein Sequenzer mit Instruktionsdekoder (1101) zur Ansteuerung der Selektionssignale des Multiplexers (1002) verwendet. Der Sequenzer bestimmt dabei abhängig von der aktuell selektierten Konfiguration (1102) und einer zusätzlichen Statusinformation (1103/1104) die nächste zu selektierende Konfiguration. Die die Statusinformation kann
(a) der Status der Status-Signal der PAE, die von 1001/1002 konfiguriert wird sein (Fig. 11a)
(b) ein beliebiges über 0802 zugeführtes Statussignal sein (Fig. 11b)
(c) eine Kombination aus (a) und (b) sein.

1001 kann auch als Speicher ausgestaltet sein, wobei anstatt 1002 ein Befehl von 1101 adressiert wird. Die Adressierung ist dabei abhängig vom Befehl selbst und von einem Statusregister. Insoweit entspricht der Aufbau einer "von Neumann" Maschine, mit dem Unterschied,
(a) der universellen Einsetzbarkeit, also den Sequenzer nicht zu verwenden (vgl. Fig. 10)
(b) daß das Statussignal nicht von dem dem Sequenzer zugeordneten Rechenwerk (PAE) generiert werden muß, sondern von einem beleibigen anderen Rechenwerk stammen kann (vgl. Fig. 11b).

Wichtig ist, daß der Sequenzer Sprünge, insbesondere auch bedingte Sprünge, innerhalb von 1001 ausführen kann.

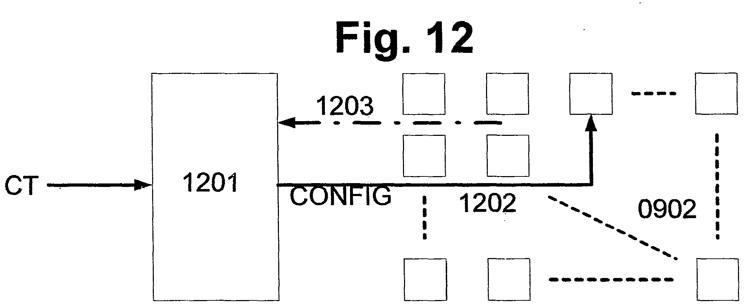

Ein weiteres zusätzliches oder alternatives Verfahren (Fig. 12) zum Aufbau von Sequenzern innerhalb von VPUs ist die Verwendung der internen Datenspeicher (1201, 0901) zum Speichern der Konfigurationsinformation für eine PAE oder eine Gruppe von PAEs. Dabei wird der Datenausgang eines Speichers auf einen Konfigurationseingang oder Dateneingang einer PAE oder mehrer PAEs geschaltet (1202). Die Adresse (1203) für 1201 kann dabei von derselben PAE/denselben PAEs oder einer oder mehreren beliebigen anderen generiert werden.

Bei diesem Verfahren ist der Sequenzer nicht fest implementiert, sondern wird durch eine PAE oder eine Gruppe von PAEs nachgebildet. Die internen Speicher können Programme aus den externen Speichern nachladen (vgl. erfindungsgemäßes Speichersystem).

Zur Speicherung von lokalen Daten (z.B. für iterative Berechnungen und als Register für einen Sequenzer) wird die PAE mit einem zusätzlichen Registersatz versehen, dessen einzelne Register entweder durch die Konfiguration bestimmt, zur ALU geführt oder von der ALU beschrieben werden; oder durch den Befehlssatz eines implementierten Sequenzers frei benutzt werden können (Register Mode). Ebenfalls kann eines der Register als Akkumulator (Akkumulator Mode) verwendet werden. Wird die PAE als vollwertige Maschine verwendet, ist es sinnvoll eines der Register als Adresszähler für externe Datenadressen zu verwenden.

Zur Verwaltung von Stacks und Akkumulatoren außerhalb der PAE (z.B. in den erfindungsgemäßen Speichern) wird das bereits beschriebene RDY/ACK REQ/ACK Synchronistionsmodell verwendet.

PAEs nach dem Stand der Technik (vgl. PACT02) sind zur Verarbeitung von bit-weisen Operationen schlecht geeignet, sofern die integrierte ALU bit-Operationen nicht besonders unterstützt, bzw. schmal (1-,2-,4-bit breit) ausgelegt ist. Die Verarbeitung von einzelnen Bits oder Signalen kann effizient gewährleistet, indem der ALU-Kern durch einen FPGA-Kern (LC) ersetzt wird, der konfigurierbar logische Operationen durchführt. Der LC ist dabei in seiner Funktion und internen Vernetzung frei konfigurierbar. Es können LC nach dem Stand der Technik eingesetzt werden. Für bestimmte Operationen ist es sinnvoll dem LC intern einen Speicher zuzuordnen. Die Interface-Baugruppen zwischen FC und dem Bussystem des Arrays werden nur geringfügig an den FC angepaßt, bleiben aber grundlegend bestehen. Zur flexibleren Gestaltung des Zeitverhaltens des FC ist es jedoch sinnvoll, die Register in den Interface-Baugruppen abschaltbar zu gestalten.

### Figuren

In Fig. 4a sind einige grundlegenden Eigenschaften des erfindungsgemäßen Verfahrens dargestellt:
Die Module des Types A sind zu einer Gruppe zusammengefaßt und besitzen am Ende einen bedingten Sprung, entweder nach B1 oder B2. An dieser Position (0401) ist ein Umkonfigurationspunkt eingefügt, da es sinnvoll ist die Zweige des bedingten Sprunges als jeweils eine Gruppe zu betrachten (Fall 1). Würden dagegen beide Zweige von B (B1 und B2) zusätzlich zusammen mit A auf den Zielbaustein passen (Fall 2), wäre es sinnvoll nur einen Umkonfigurationspunkt bei 0402 einzufügen, da dadurch die Zahl der Konfigurationen verringert wird und sich die Verarbeitungsgeschwindigkeit erhöht. Beide Zweige (B1 und B2) springen bei 0402 nach C.

Die Konfiguration der Zellen auf dem Zielbaustein ist in Fig. 4b schematisch dargestellt. Dabei werden die Funktionen der einzelnen Graphenknoten auf die Zellen des Zielbausteins abgebildet. Jeweils eine Zeile stellt eine Konfiguration dar. Die gestrichelten Pfeile bei einem Zeilenwechsel zeigen eine Umkonfiguration an. Sₙ ist eine datenspeichernde Zelle, von beliebiger Ausgestaltung (Register, Speicher, etc.). Dabei ist SₙI ein Speicher, der Daten entgegennimmt und SₙO ein Speicher der Daten ausgibt. Der Speicher Sₙ ist für gleiche n jeweils derselbe, I und O kennzeichnen die Datentransferrichtung.

Beide Fälle des bedingten Sprunges (Fall 1, Fall 2) sind dargestellt.

Das Modell in Fig. 4 entspricht einem Datenflußmodell, jedoch mit der wesentlichen Erweiterung des Umkonfigurationspunkts und der damit erreichbaren Partitionierung des Graphen, wobei die zwischen den Partitionen übertragenen Daten zwischengespeichert werden.

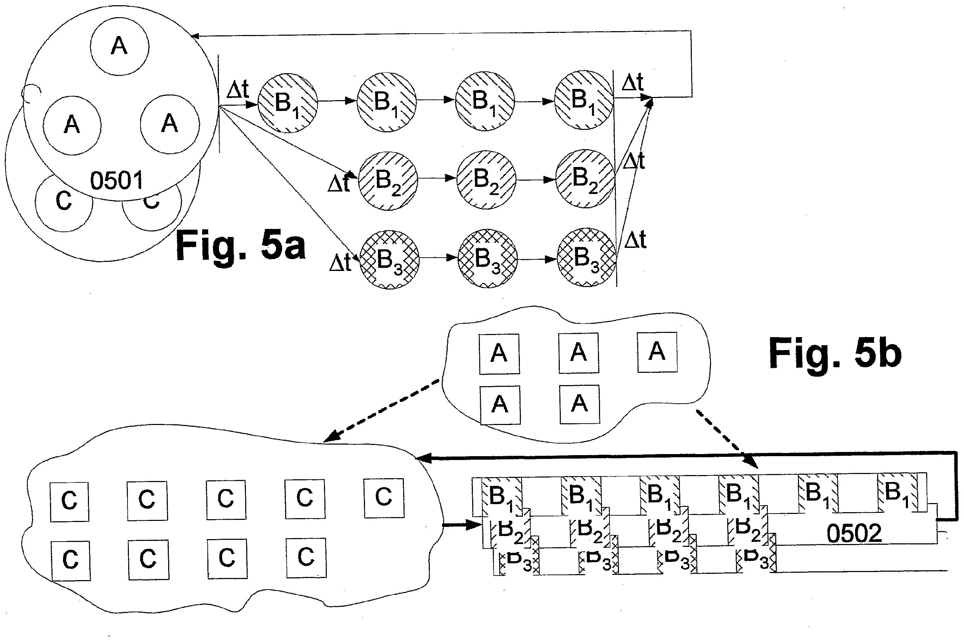

Im Modell von Fig. 5a wird aus einer beliebigen Graphenmenge und -Konstellation (0501) selektiv ein Graph Bₙ aus einer Menge von Graphen B aufgerufen. Nach der Ausführung von B gelangen die Daten nach 0501 zurück.
Wird in 0501 ein ausreichend großer Sequencer (A) implementiert, ist mit dem Modell ein den typischen Prozessoren sehr ähnliches Prinzip implementierbar. Dabei gelangen
1. Daten in den Sequenzer A, die dieser als Befehle dekodiert und entsprechend dem "von Neumann"-Prinzip darauf reagiert;
2. Daten in den Sequenzer A, die als Daten betrachtet werden und an ein fest konfiguriertes Rechenwerk C zur Berechnung weitergeleitet werden.

Der Graph B stellt selektierbar ein besonderes Rechenwerke und/oder besondere Opcodes für bestimmte Funktionen zur Verfügung und wird alternativ zur Beschleunigung von C verwendet. Beispielsweise kann B1 ein optimierter Algorithmus zu Berechnung von Matrixmultiplikationen sein, während B2 einen FIR-Filter und B3 eine Mustererkennung darstellt. Entsprechend eines Opcodes der von 0501 dekodiert wird, wird der geeignete bzw. entsprechende Graph B aufgerufen.

Fig. 5b schematisiert die Abbildung auf die einzelnen Zellen, wobei in 0502 der pipelineartige Rechenwerks-Character symbolisiert wird.

Während in den Umkonfigurationspunkten von Fig. 4 vorzugsweise größere Speicher zum Zwischenspeichern der Daten eingefügt werden, ist eine einfache Synchronisation der Daten in den Umkonfigurationspunkten von Fig. 5 ausreichend, da der Datenstrom vorzugsweise als ganzer durch den Graphen B läuft und der Graph B nicht weiter partitioniert ist; dadurch ist das Zwischenspeichern der Daten überflüssig.

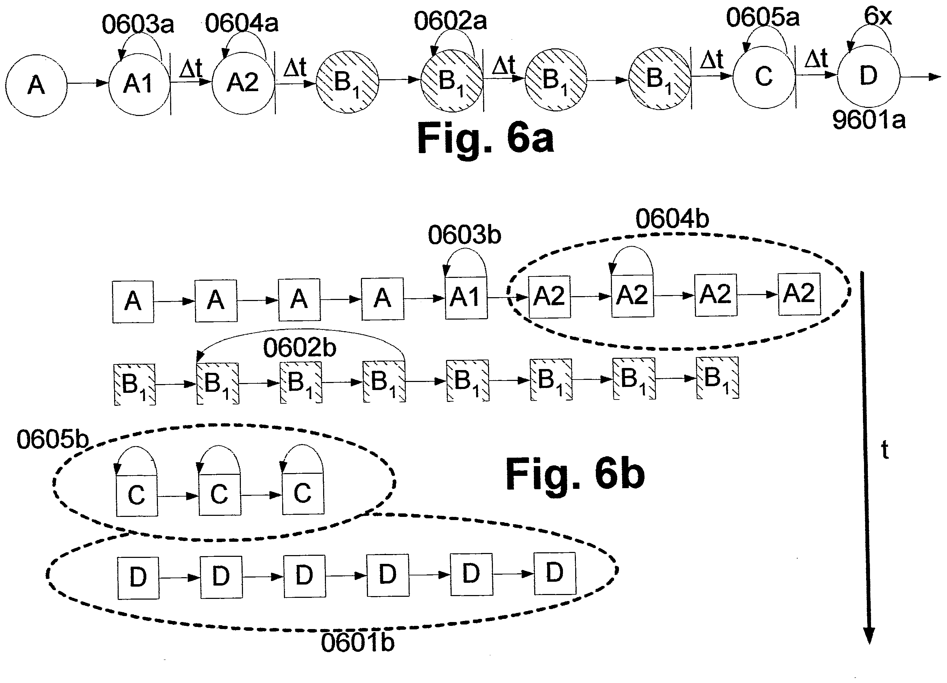

In Fig. 6a sind verschiedene Schleifen dargestellt. Schleifen können grundsätzlich auf drei Arten behandelt werden:
1. Hardware-Ansatz: Schleifen werden vollständig ausgewalzt auf die Zielhardware abgebildet (0601a/b). Wie bereits erläutert ist dies nur bei wenigen Schleifenarten möglich.
2. Datenfluß-Ansatz: Innerhalb des Datenflußes werden Schleifen über mehrere Zellen hinweg aufgebaut (0602a/b). Das Ende der Schleife wird auf den Schleifenanfang rückgekoppelt.
3. Sequenzer-Ansatz: Ein Sequenzer mit minimalem Befehlssatz führt die Schleife aus (0603a/b). Dabei sind die Zellen der Zielbausteine so ausgestaltet, daß sie den entsprechenden Sequenzer beeinhalten (vgl. Fig. 11a/b).

Durch eine geeignete Zerlegung von Schleifen kann deren Ausführung ggf. optimiert werden:
1.Unter Verwendung von Optimierungsmethoden nach dem Stand der Technik läßt sich häufig der Schleifenrumpf, also der wiederholt auszuführende Teil, dadurch optimieren, daß bestimmte Operationen aus der Schleife entfernt werden und vor oder hinter die Schleife gestellt werden (0604a/b). Dadurch wird die Menge der zu sequencenden Befehle erheblich reduziert. Die entfernten Operationen werden nur einmal vor bzw. nach Ausführung der Schleife durchlaufen.
2. Eine weitere Optimierungsmöglichkeit ist das Teilen von Schleifen in mehrere kleinere oder kürzere Schleifen. Dabei findet die Teilung derart statt, daß mehrere parallele oder mehrere sequentielle (0605a/b) Schleifen entstehen.

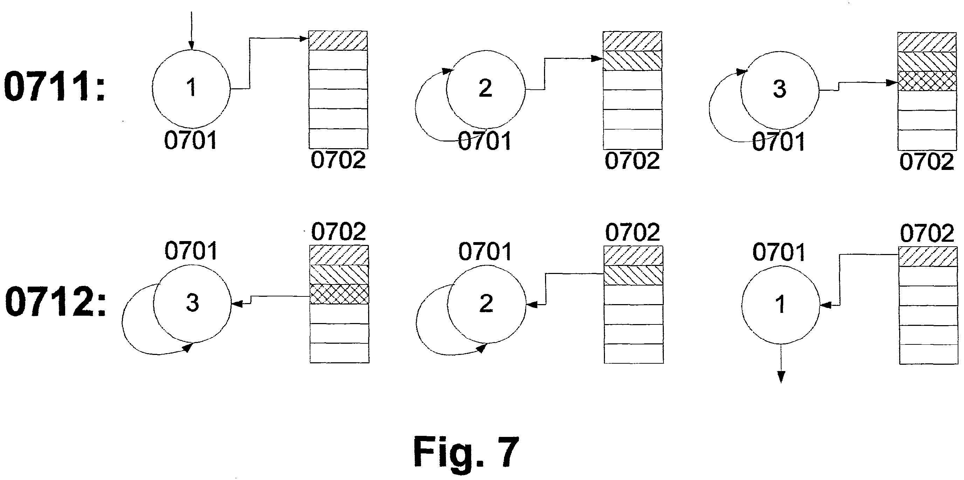

Fig. 7 verdeutlicht die Implementierung einer Rekursion. Dabei werden dieselben Ressourcen (0701) in Form von Zellen für jede Rekursionsebene (1-3) verwendet. Die Ergebnisse einer jeden Rekursionsebene (1-3) werden beim Aufbau (0711:) in einen nach dem Stack-Prinzip aufgebauten Speicher (0702) geschrieben. Gleichzeitig mit dem Abbau (0712:) der Ebenen wird der Stack abgebaut.

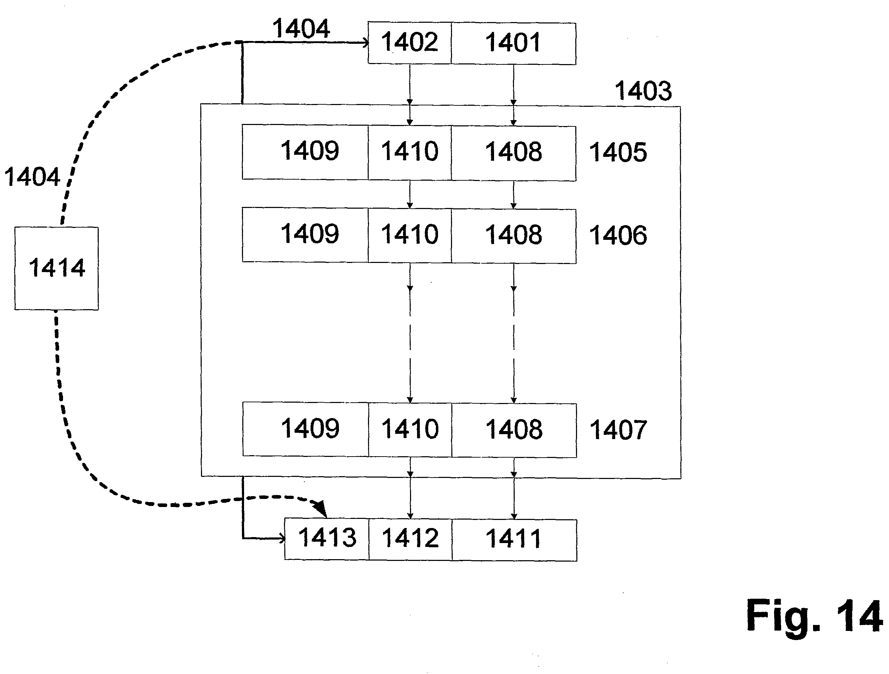

In Fig. 14 wird das Virtual-Machine-Modell dargestellt. Aus einem externen Speicher werden Daten (1401) und zu den Daten gehörende Zustände (1402) in eine VPU (1403) gelesen. 1401/1402 werden über eine von der VPU generierte Adresse 1404 selektiert. Innerhalb der VPU sind PAEs zu unterschiedlichen Gruppen zusammengefaßt (1405, 1406, 1407). Jede Gruppe besitzt einen datenverarbeitenden Teil (1408), der lokale impilzite Zustände (1409) besitzt, die keinen Einfluß auf die umliegenden Gruppen besitzt. Daher werden dessen Zustände nicht außerhalb der Gruppe weitergeleitet. Er kann jedoch von den externen Zuständen abhängig sein. Ein weiterer Teil (1410) generiert Zustände, die Einfluß auf die umliegenden Gruppen haben.
Die Daten und Zustände der Ergebnisse werden in einen weiteren Speicher (1411, 1412) abgelegt. Gleichzeitig kann die Adresse von Operanden (14004) als Pointer gespeichert (1413) werden. Zur zeitliche Synchronisation kann 1404 über Register (1414) geführt werden.
In Fig. 14 ist zur Verdeutlichung ein einfaches Modell dargestellt. Die Vernetzung und Gruppierung kann wesentlich komplexer sein als in diesem Modell. Ebenfalls können Zustände und Daten auch an weitere Module als den Nachfolgenden übertragen werden. Es ist möglich, daß Daten an andere Module übertragen werden als die Zustände. Sowohl Daten als auch Zustände eines bestimmten Moduls können von mehreren unterschiedlichen Modulen empfangen werden. Innerhalb einer Gruppe kann 1408, 1409 und 1410 voranden sein. Abhängig vom Algorithmus können auch einzelne Teile fehlen (z.B. 1410 und 1409 vorhanden, 1410 jedoch nicht).

In Figur 15 ist dargestellt wie aus einem Verarbeitungsgraphen Teilapplikationen extrahiert werden. Dabei wird der Graph so zerlegt, daß lange Graphen sinnvoll zerteilt werden und in Teilapplikationen (H,A,C,K) abgebildet werden. Nach Sprüngen werden neue Teilgraphen gebildet (C,K) wobei für jeden Sprung ein getrennter Teilgraph gebildet wird.
Jeder Teilgraph ist in dem ULIW-Modell von der CT (vgl.
PACT10) getrennt ladbar. Wesentlich ist, daß Teilgraphen durch die Mechanismen in PACT10 verwaltet werden können. Dazu gehört insbesondere das intelligente Konfigurieren, Ausführen/Starten und Löschen der Teilapplikationen.
1503 bewirkt das Laden oder Konfigurieren von Teilapplikation A, während Teilapplikation K ausgeführt wird. Dadurch ist
a) Teilapplikation A zum Ausführungsende von Teilapplikation K bereits komplett in die PAEs konfiguriert, sofern die PAEs mehrere Konfigurationsregister aufweisen;
b) Teilapplikation A zum Ausführungsende von Teilapplikation K bereits in die CT geladen, sofern die PAEs nur ein Konfigurationsregister aufweisen.

1504 startet die Ausführung von Teilapplikation K. D.h. zur Laufzeit werden die nächsten benötigten Programmteile während der Abarbeitung der aktuellen Programmteile unabhängig geladen. Dadurch ergibt sich ein wesentlich effizienterer Umgang mit den Programmcode, als bei üblichen Cache-Mechanismen.

Bei Teilapplikationen A wird eine weitere Besonderheit dargestellt. Prinzipiell wäre es denkbar beide möglichen Zweige (C,K) des Vergleiches vorzukonfigurieren. Angenommen, die Zahl der zur Verfügung stehenden freien Konfigurationsregister reicht dazu nicht aus, wird der wahrscheinlichere der Zweige konfiguriert (1506). Das spart zudem Konfigurationszeit. Bei Ausführung des nicht konfigurierten Zweigs, wird (da die Konfiguration noch nicht in die Konfigurationsregister geladen ist) die Programmausführung unterbrochen, bis der Zweig konfiguriert ist.

Grundsätzlich ist es möglich auch nicht konfigurierte Teilapplikationen auszuführen (1505), diese müssen dann wie zuvor beschrieben vor der Ausführung geladen werden.

Ein FETCH-Befehl kann von einem Trigger mittels einer eigenen ID angestoßen werden. Damit können Teilapplikationen abhängig vom Zustand des Arrays vorgeladen werden.

Das ULIW-Modell unterscheidet sich im Wesentlichen vom VLIW-Modell, indem es
1. Das Routing der Daten mit beinhaltet
2. Größere Instruktionswörter bildet.

Ebenfalls kann das beschriebene Verfahren der Partitionierung von Compilern für heutige Standardprozessoren nach dem RISC/CISC-Prinzip ebenso eingesetzt werden. Wird dann eine Einheit (CT) nach PACT10 zur Steuerung des Befehls-Caches verwendet, kann dieser erheblich optimiert und beschleunigt werden.
Dazu werden "normale" Programme entsprechend in Teilapplikationen partitioniert. Gemäß PACT10 werden Verweise auf mögliche nachfolgende Teilapplikationen eingeführt (1501, 1502). Dadurch kann eine CT die Teilapplikationen bereits in den Cache vorladen bevor sie benötigt werden.Bei.Sprüngen wird nur die angesprungen Teilapplikation ausgeführt, die andere(n) werden später durch neue Teilapplikationen überschrieben. Neben dem intelligenten Vorladen hat das Verfahren den weiteren Vorteil, daß die Größe der Teilapplikationen beim Laden bereits bekannt ist. Dadurch können optimale Bursts beim Zugriff auf die Speicher von der CT ausgeführt werden, was den Speicherzugriff wiederum erheblich beschleunigt.

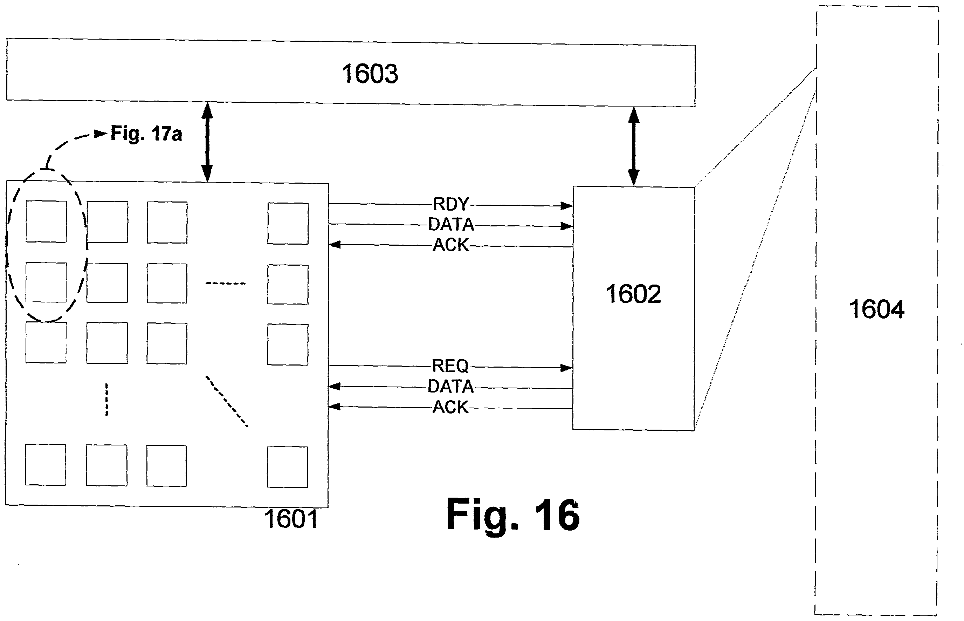

Figur 16 zeigt den Aufbau eines Stack-Prozessors. Durch das PAE-Array (1601) werden Protokolle generiert um auf einen als LIFO konfigurierten Speicher (1602) zu schreiben oder zu lesen. Dabei wird ein RDY/ACK-Protokoll zum Schreiben und REQ/ACK-Protokoll zum Lesen verwendet. Die Vernetzung und Betriebsmodi werden von der CT (1603) konfiguriert. 1602 kann dabei seinen Inhalt auf den externen Speicher (1604) auslagern.

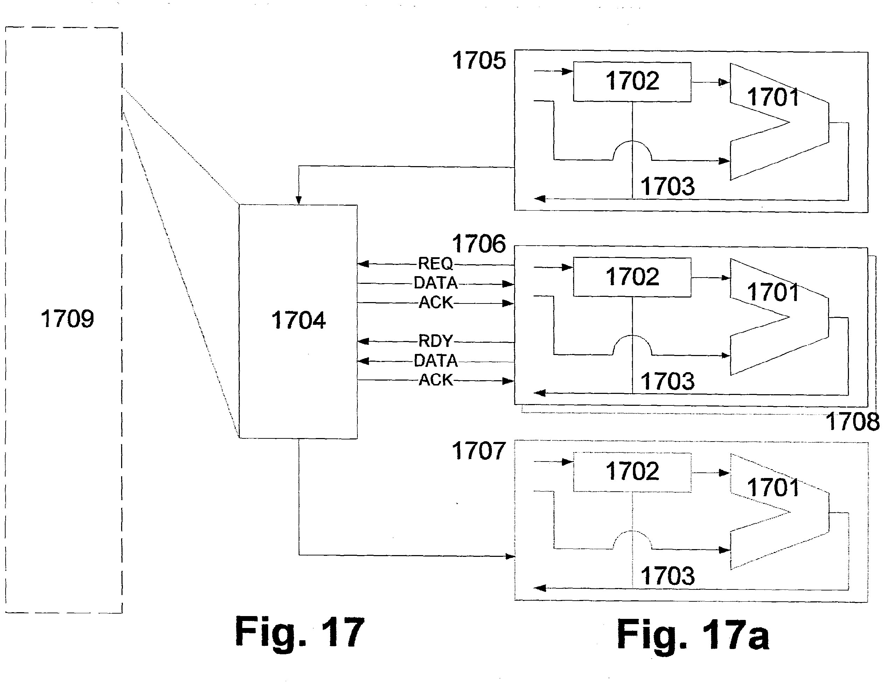

Eine Reihe der PAEs sollen in diesem Beispiel als Register-Prozessor arbeiten (Figur 17). Jede PAE besteht aus einem Rechenwerk (1701) und einem Akkumulator (1702) auf den das Ergebnis von 1701 rückgekoppelt (1703) ist. Damit stellt in diesem Beispiel jede PAE einen Akkumulator-Prozessor dar. Eine PAE (1705) liest und schreibt die Daten in den als Standardspeicher konfigurierten RAM (1704). Eine weitere PAE (1706) generiert die Registeradressen.
Oftmals ist es sinnvoll eine getrennt PAE zum Lesen der Daten zu verwenden. Dann würde 1705 nur schreiben und die PAE 1707 lesen. Dabei wird eine weitere PAE (1708, gestrichelt unterlegt) zum Generieren der Leseadressen einzuführen.
Es ist nicht zwingend notwendig getrennte PAEs zum Generieren der Adressen zu verwendet. Oftmals sind die Register implizit und können dann als Konstanten konfiguriert werden von den datenverarbeitenden PAEs gesendet werden.

Die Verwendung von Akkumulator-Prozessoren for einen Register-Prozessor ist beispielshaft. Ebenso können zum Aufbau von Registerprozessoren PAEs ohne Akkumulator verwendet werden. Die in Figur 17 gezeigte Architektur kann zur Ansteuerung von Registern als auch zum Ansteuern einer Load/Store-Einheit dienen.
Bei der Verwendung als Load/Store-Einheit ist es fast zwingend notwendig einen externen RAM (1709) nachzuschalten, sodaß 1704 nur einen temporären Ausschnitt aus 1709, quasi als Cache, darstellt.
Auch bei der Verwendung von 1704 als Register-Bank ist es teilweise sinnvoll einen externen Speicher nachzuschalten. Dadurch können PUSH/POP Operationen nach dem Stand der Technik durchgeführt werden, die den Registerinhalt in einen Speicher schreiben oder aus diesem Lesen.

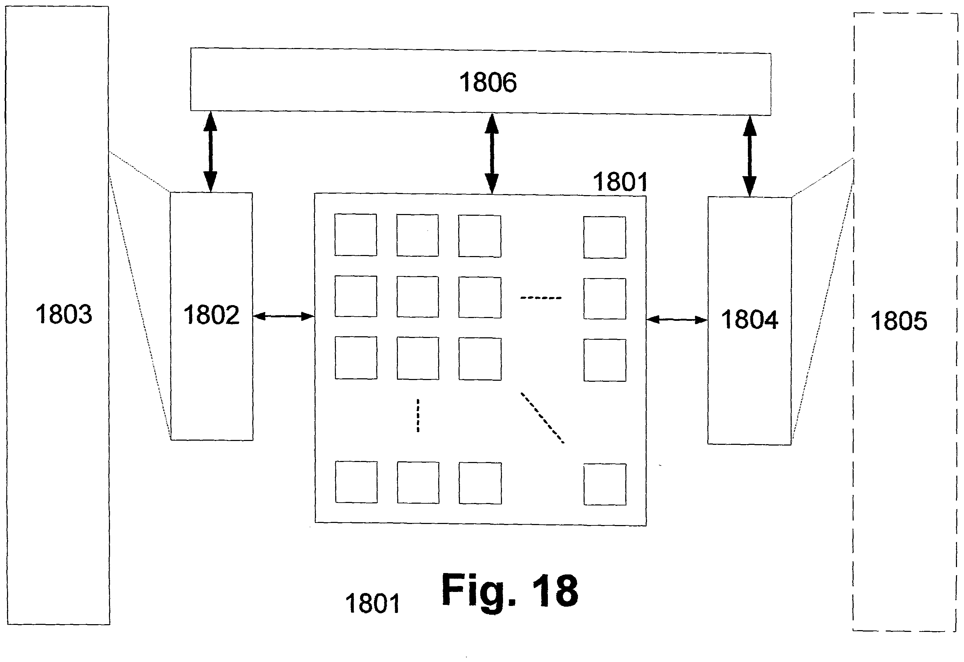

In Figur 18 ist als Beispiel eine komplexe Maschine abgebildet bei der das PAE-Array (1801) einerseits einen Load/Store-Einheit (1802) mit nachgeschaltetem RAM (1803) ansteuert und gleichzeitig eine Register-Bank (1804) mit nachgeschaltetem RAM (1805) aufweist. 1802 und 1804 können jeweils von einer PAE oder einer beliebigen Gruppe von PAEs angesteuert werden. Die Einheit wird gemäß dem VPU-Prinzip von einer CT (1806) gesteuert.
Wichtig ist, daß zwischen der Load/Store-Einheit (1802) und der Register-Bank (1804) und deren Ansteuerung kein wesentlicher Unterschied besteht.

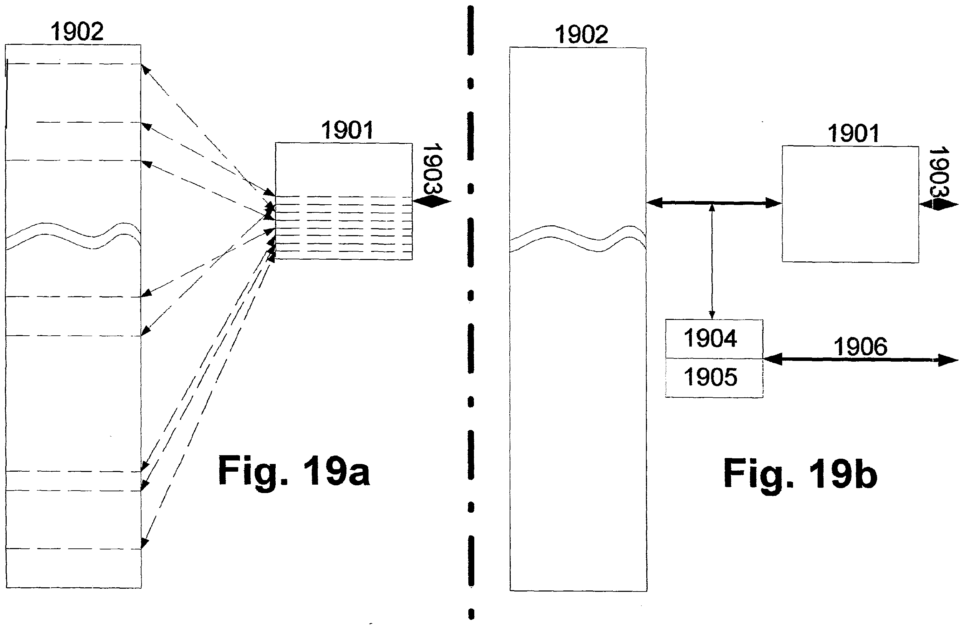

Die Figuren 19,20,21 zeigen einen erfindungsgemäßen internen Speicher, der zugleich eine Kommunikationseinheit mit externen Speichern und/oder Peripherie darstellt. Die einzelnen Figuren zeigen unterschiedliche Betriebsarten desselben Speichers. Die Betriebsarten, sowie einzelne Detaileinstellungen werden dabei konfiguriert.

Figur 19a zeigt einen erfindungsgemäßen Speicher im "Register/Cache" Modus. Im erfindungsgemäßen Speicher (1901) sind Datenworte eines für gewöhnlich größeren und langsameren externen Speichers (1902) abgelegt.
Der Datenaustausch zwischen 1901, 1902 und den über einen Bus (1903) angeschlossenen PAEs (nicht dargestellt) findet dabei wie folgt statt, wobei unter zwei Betriebsarten unterschieden wird:
A) Die von den PAEs von dem Hauptspeicher 1902 gelesenen oder gesendeten Daten werden in 1901 mittels eines Cache-Verfahrens gepuffert. Dabei kann jedes bekannte Cache-Verfahren zum Einsatz kommen.
B) Mittels einer Load/Store-Einheit werden die Daten bestimmter Adressen zwischen 1902 und 1901 übertragen. Dabei werden bestimmte Adressen, sowohl in 1902 als auch in 1901 vorgegeben, wobei für 1902 und 1901 gewöhnlicherweise unterschiedliche Adressen verwendet werden. Die einzelnen Adressen können dabei durch Konstante oder durch Berechnungen in PAEs erzeugt werden. In dieser Betriebsart arbeitet der Speicher 1901 als Registerbank.

Die Zuordnung der Adressen zwischen 1901 und 1902 kann dabei beliebig sein und hängt lediglich von den jeweiligen Algorithmen der beiden Betriebsarten ab.

In 19b ist die entsprechende Maschine als Blockdiagramm dargestellt. Dem Bus zwischen 1901 und 1902 ist eine Steuereinheit (1904) zugeordnet, die je nach Betriebsart als Load/Store-Einheit (nach dem Stand der Technik) oder als Cache-Kontroller (nach den Stand der Technik) agiert. Dieser Einheit kann bei Bedarf eine Speicherverwaltungseinheit (MMU) (1905) mit Adressübersetzung und -überprüfung zugeordnet werden. Sowohl 1904 als auch 1905 kann von den PAEs angesteuert werden. So wird beispielsweise die MMU programmiert, die Load/Store Adressen gesetzt oder ein Cache-Flush ausgelöst.

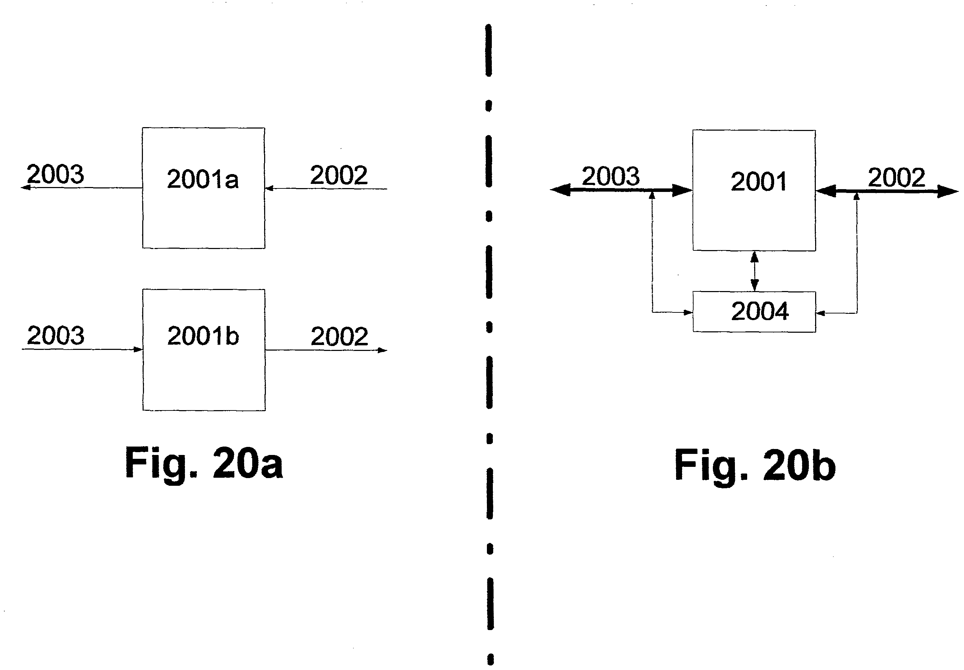

Figur 20 zeigt den Einsatz des Speichers (2001) im FIFO-Modus, in welchem nach dem bekannten FIFO-Prinzip Datenströme entkoppelt werden. Der typische Einsatz ist in einem Schreib-(2001a) oder Leseinterface (2001b). Dabei werden Daten zwischen den PAEs, die an dem internen Bussystem (2002) angeschlossen sind und dem Peripheriebus (2003) zeitlich entkoppelt.
Zur Steuerung des FIFOs ist eine Einheit (2004) vorgesehen, die den Schreib- und Lesezeiger des FIFOs abhängig von den Busoperationen von 2003 und 2002 steuert.

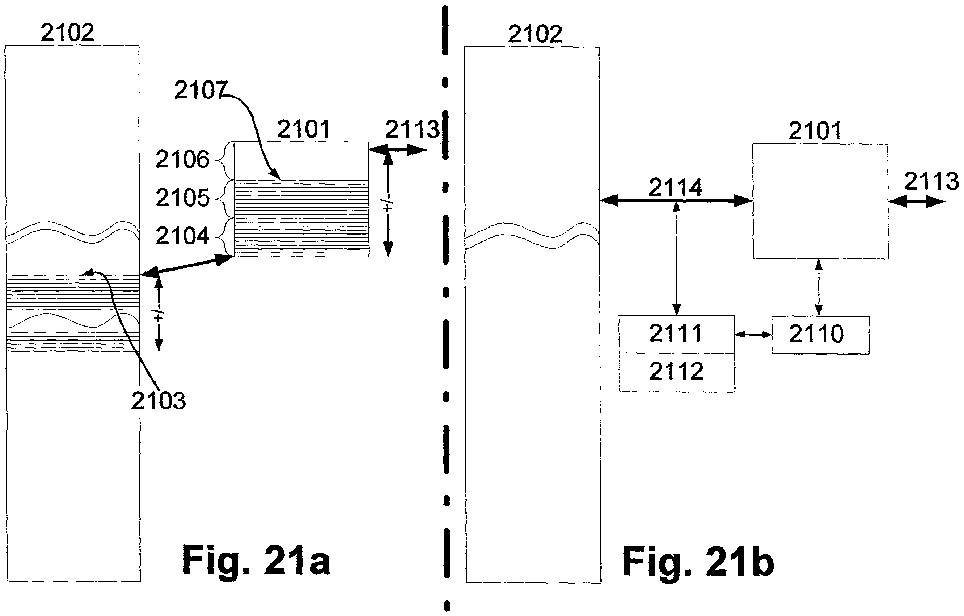

In Figur 21 ist das Arbeitsprinzip der erfindungsgemäßen Speicher im Stack-Modus dargestellt. Ein Stack ist (nach dem Stand der Technik) ein Stapelspeicher, dessen oberstes/unterstes Element das gerade Aktive ist. Daten werden immer oben/unten angefügt, ebenso werden die Daten oben/unten entfernt. D.h. das zuletzt geschriebene Datum ist auch das, welches zuerst gelesen wird (Last In First Out). Ob ein Stack nach oben oder unten wächst, ist unbedeutend und implementierungsabhängig. Im folgenden Ausführungsbeispiel werden Stacks betrachtet, die nach oben wachsen.

Dabei sind die aktuellsten Daten im internen Speicher 2101 gehalten, der aktuellste Eintrag (2107) befindet sich ganz oben in 2101. Alte Einträge sind auf den externen Speicher 2102 ausgelagert. Wächst der Stack weiter, reicht der Platz im internen Speicher 2101 nicht mehr aus. Bei Erreichen einer bestimmten Datenmenge, die durch eine (frei wählbare) Adresse in 2101 oder einen (frei wählbaren) Wert in einem Eintragszähler repräsentiert sein kann, wird ein Teil von 2101 als Block an das aktuellere Ende (2103) des Stacks in 2102 geschrieben. Dieser Teil sind die ältesten und somit am wenigsten aktuellen Daten (2104). Danach werden die verbleibenden Daten in 2101 so verschoben, daß die nach 2102 kopierten Daten in 2101 mit den verbleibenden Daten (2105) überschrieben werden und somit genügend freier Speicher (2106) für neue Stackeinträge entsteht.
Nimmt der Stack ab, werden ab einem gewissen (frei wählbaren) Punkt die Daten in 2101 so verschoben, daß hinter den ältesten und unaktuellsten Daten freier Speicher entsteht. In den freigewordenen Speicher wird ein Speicherblock aus 2102 kopiert, der dann in 2102 gelöscht wird.
Mit anderen Worten repräsentieren 2101 und 2102 einen einzigen Stack, wobei die gerade aktuellen Einträge in 2101 liegen und die älteren und weniger aktuellen in 2102 ausgelagert sind. Quasi stellt das Verfahren einen Cache für Stacks dar. Da die Datenblöcke vorzugsweise per Blockoperationen übertragen werden, kann der Datentransfer zwischen 2101 und 2102 in den schnellen Burst-Betriebsarten moderner Speicher (SDRAM, RAMBUS, etc.) ausgeführt werden.
Es soll nochmals erwähnt werden, daß im Ausführungsbeispiel in Fig. 21 der Stack nach oben wächst. Sollte der Stack nach unten wachsen (eine häufig verwendete Methode), sind die Positionen oben/unten und die Richtungen in die die Daten innerhalb eines Speichers bewegt werden genau vertauscht.

Sinnvollerweise wird der interne Stack 2101 als eine Art Ringspeicher ausgestaltet. Die Daten an einem Ende des Ringes werden zwischen PAEs und 2101 übertragen und am anderen Ende des Ringes zwischen 2101 und 2102. Dadurch entsteht der

Vorteil, daß einfach Daten zwischen 2101 und 2102 verschoben werden können, ohne Einfluß auf die internen Adressen in 2101 zu haben. Lediglich die Positionszeiger der unteren und oberen Daten und der Füllstandszähler müssen jeweils angepaßt werden. Die Datenübertragung zwischen 2101 und 2102 kann durch die bekannten Ringspeicher-Flags "beinahe voll (almost full) / voll (full)" und "beinahe leer (almost empty) / leer (empty)" ausgelöst werden.

Die notwendige Hardware ist als Blockschaltbild in Fig 21b dargestellt. Dem internen Stack 2101 ist eine Einheit (2110) zur Verwaltung der Zeiger und Zähler zugeordnet. In den Bus (2114) zwischen 2101 und 2102 ist eine Einheit (2111) zur Steuerung der Datentransfers eingeschleift. Dieser Einheit kann eine MMU (2112) nach dem Stand der Technik mit den entsprechenden Prüfsystemen und Adressübersetzungen zugeordnet werden.
Die Verbindung zwischen den PAEs und 2101 wird über das Bussystem 2113 realisiert.

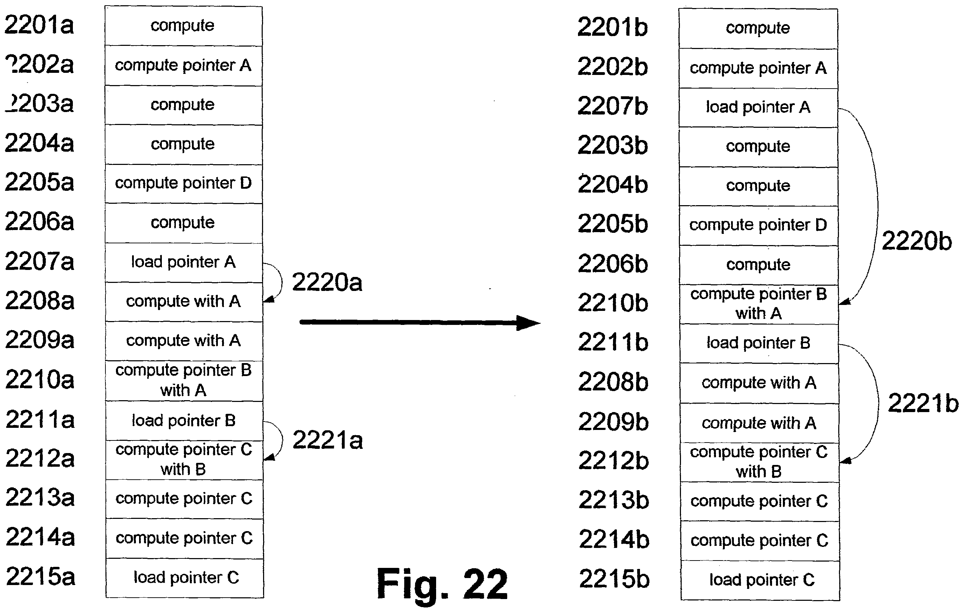

In Figur 22 ist ein Beispiel für das Umsortieren von Graphen gezeigt. Die linke Spalte (22..a) zeigt eine unoptimierte Anordnung von Befehlen. Dabei werden die Pointer A (2207a) und B (2211a) geladen. Jeweils bereits einen Takt später werden die Werte der Pointer benötigt (2208a, 2212a). Diese Abhängigkeit ist zu kurz um effizient ausgeführt zu werden, da zum Laden aus dem Speicher eine bestimmte Zeit (2220a, 2221a) benötigt wird. Durch umsortieren der Befehle (22..b) werden die Zeiträume maximal vergrößert (2220b, 2221b). Obwohl in 2210 und in 2208 der Wert des Pointers von A benötigt wird, wird 2208 nach 2210 einsortiert, da dadurch mehr Zeit zur Berechnung von B gewonnen wird. Es ist möglich Berechnungen die von den Pointern unabhängig sind (2203,2204,2206) beispielsweise zwischen 2211 und 2212 einzufügen um mehr Zeit für die Speicherzugriffe zu erhalten. Ein Compiler oder Assembler kann hier anhand von Systemparametern, die die Zugriffzeiten repräsentieren, die entsprechende Optimierung vornehmen.

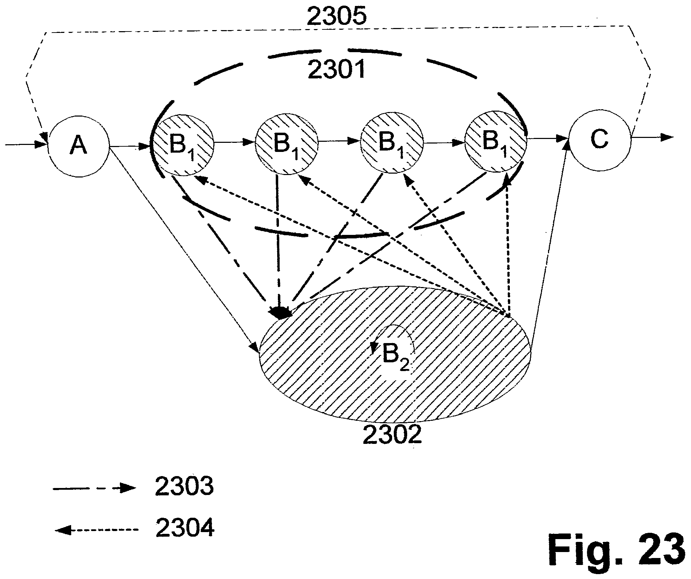

Figur 23 zeigt einen Sonderfall der Figuren 4-7. Häufig besteht ein Algorithmus, auch innerhalb von Schleifen, aus Datenflußteilen und sequentiellen Teilen. Derartige Strukturen können gemäß dem beschriebenen Verfahren unter Einsatz des in PACT07 beschriebenen Bussystems effizient aufgebaut werden. Hierzu wird das RDY/ACK-Protokoll des Bussystems zunächst um das erfindungsgemäße REQ/ACK-Protokoll erweitert. Dadurch können gezielt Registerinhalte einzelner PAEs von einer oder mehreren anderen PAEs oder von der CT abgefragt werden.
Eine Schleife (2305) wird nun in mindestens zwei Graphen zerlegt, einen ersten (2301), der den Datenflußanteil repräsentiert und einen zweiten (2302), der den sequentiellen Anteil abbildet.
Ein bedingter Sprung wählt zwischen den beiden Graphen. Das besondere ist nun, daß 2302 den internen Zustand von 2301 kennen zur Ausführung benötigt und umgekehrt 2301 den Zustand von 2302 kennen muß.
Dies wird realisiert, indem der Zustand genau einmal, nämlich in den Registern der PAEs des performanteren Datenflußgraphen (2301) gespeichert wird.
Wird in 2302 gesprungen, liest der Sequenzer bei Bedarf die Zustände der jeweiligen Register mittels des Bussystems aus PACT07 aus (2303). Der Sequenzer führt seine Operationen aus und schreibt alle geänderten Zustände in die Register (wiederum über das Bussystem nach PACT07) zurück (2304). Abschließend soll angemerkt werden, daß es sich bei den besprochenen Graphen nicht unbedingt um enge Schleifen (2305) handeln muß. Das Verfahren ist generell auf jeden Teilalgorithmus verwendbar, der innerhalb eines Programmablaufes mehrfach ausgeführt wird (reentrant) und wahlweise entweder sequentiell oder parallel (datenflußartig) abgearbeitet wird, wobei die Zustände zwischen dem sequentiellen und dem parallelen Teil transferiert werden müssen.

Die Waverekonfigurierung bietet erhebliche Vorteile bei der Geschwindigkeit der Umkonfiguration, insbesondere bei einfachen sequentiellen Operationen.
Eine grundlegende Besonderheit dieser Verarbeitungsmethode ist, daß der Sequenzer auch als externen Mikroprozessor ausgestaltet sein kann. Das bedeutet daß ein Prozessor über die Datenkanäle mit dem Array verbunden ist und lokale, temporäre Daten über Bussysteme mit dem Array austauscht. Sämtliche sequentielle Teile eines Algorithmus die nicht in das Array aus PAEs abgebildet werden können werden auf dem Prozessor abgewickelt.
Es muß zwischen drei Bussystemem unterschieden werden:
1. Datenbus, der den Austausch der verarbeiteden Daten zwischen VPU und Prozessor regelt.
2. Registerbus, der den Zugriff auf die Register der VPU ermöglicht und den somit den Datenaustausch (2302, 2304) zwischen 2302 und 2301 gewährleistet.
3. Konfigurationsdatenbus, der das Array der VPU konfiguriert.

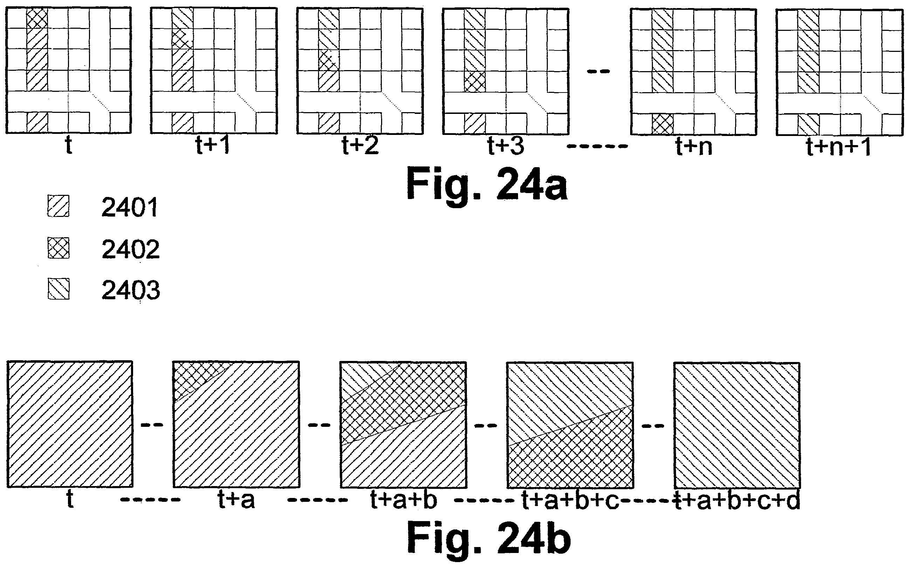

In Figur 24 sind die Auswirkungen zeitlich dargestellt. Einfach schraffierte Flächen stellen datenverarbeitende PAEs dar, wobei 2401 PAEs nach der Umkonfiguration und 2403 PAEs vor der Umkonfiguration zeigen. Doppelt schraffierte Flächen (2402) zeigen PAEs die gerade umkonfiguriert werden oder auf die Umkonfiguration warten.
Figur 24a zeigt den Einfluß der Wave-Rekonfigurierung auf einen einfachen sequentiellen Algorithmus. Hier ist es mögliche exakt die PAEs umzukonfigurieren, denen eine neue Aufgabe zugeteilt wird. Da in jedem Takt eine PAE eine neue Aufgabe erhält kann dies effizient, nämlich zeitgleich durchgeführt werden.
Beispielsweise dargestellt ist eine Reihe von PAEs aus der Matrix aller PAEs einer VPU. Angegeben sind die Zustände in den Takten nach Takt t mit jeweils einem Takt Verzögerung.

In Figur 24b ist die zeitliche Auswirkung der Umkonfiguration von großen Teilen dargestellt. Beispielsweise dargestellt ist eine Menge von PAEs einer VPU. Angegeben sind die Zustände in den Takten nach Takt t mit einer unterschiedlichen Verzögerung von jeweils mehreren Takten.
Während zunächst nur ein kleiner Teil der PAEs umkonfiguriert wird oder auf die Umkonfiguration wartet, wird diese Fläche mit zunehmender Zeit größer, bis alle PAEs umkonfiguriert sind. Das größer werden der Fläche bedeutet, daß, bedingt durch die zeitliche Verzögerung der Umkonfiguration immer mehr PAEs auf die Umkonfiguration warten (2402). Dadurch geht Rechenleistung verloren.
Es wird daher vorgeschlagen ein breiteres Bussystem zwischen der CT (insbesondere des Speichers der CT) und den PAEs einzusetzen, das genügend Leitungen zur Verfügung stellt, um innerhalb eines Taktes mehrere PAEs zugleich
umzukonfigurieren.

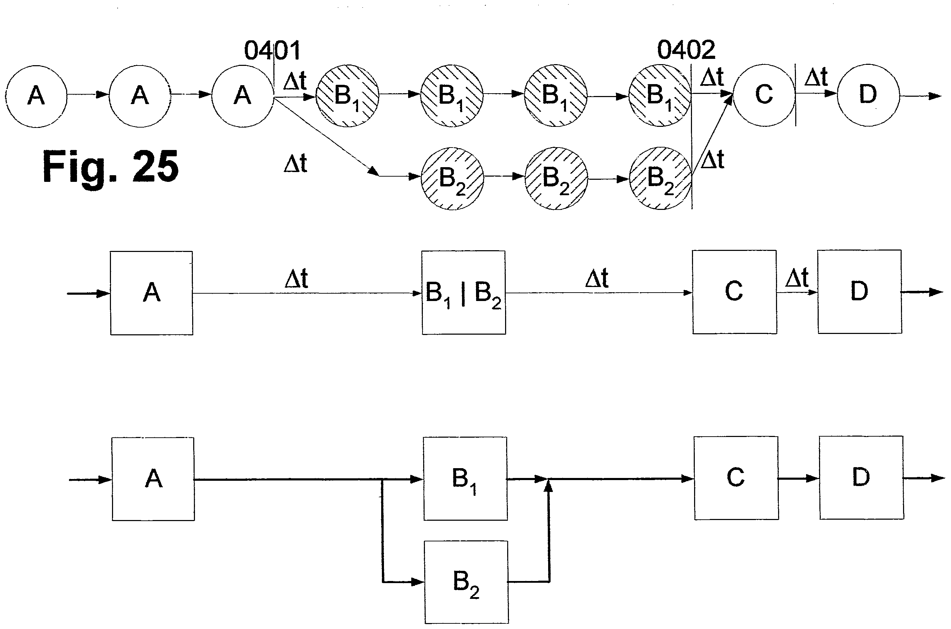

Figur 25 verdeutlicht die Skalierbarkeit der VPU-Technologie. Die Skalierbarkeit geht im Wesentlichen aus dem Ausrollen eines Graphens hervor, ohne daß eine zeitliche Abfolge einzelne Teilapplikationen trennt. Als Beispiel ist der Algorithmus aus Figur 4 gewählt. In Figur 25a werden die einzelnen Teilgraphen zeitlich nacheinander auf die VPU übertragen, wobei entweder B₁ oder B₂ geladen wird. In Figur 25b werden alle Teilgraphen auf eine Menge von VPUs übertragen und mit Bussystemen untereinander verbunden. Dadurch können große Datenmengen ohne den negativen Einfluß des Umkonfigurierens leistungsfähig abgearbeitet werden.

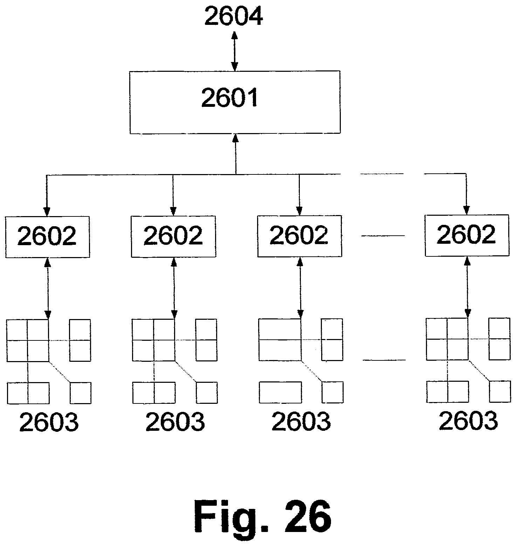

Figur 26 zeigt eine Schaltung zur Beschleunigung der (Um-) konfigurationszeit von PAEs. Gleichzeitig kann die Schaltung zur Verarbeitung von sequentiellen Algorithmen verwendet werden. Das Array von PAEs (2605) ist in mehrere Teile (2603) partitioniert. Jedem Teil ist eine eigenständige Einheit zur (Um-)konfiguration (2602) zugeordnet. Diesen Einheiten übergeordnet ist eine CT (2601) nach dem Stand der Technik (vgl. PACT10), die wiederum an eine weitere CT oder an einen Speicher angeschlossen ist (2604). Die CT läd die Algorithmen in die Konfigurationseinheiten (2602). Die 2602 laden selbständig die Konfigurationsdaten in die ihnen zugeordneten PAEs.
In Figur 27 ist ein Aufbau einer Konfigurationseinheit dargestellt. Kern der Einheit ist ein Sequenzer (2701) der eine Reihe von Befehlen beherrscht.
Die wesentlichen Befehle sind:
wait <trg#>
Warten auf das Eintreffen eines bestimmten Triggers aus dem Array, der angibt, welche nächste Konfiguration geladen werden soll.

### lookup <trg#>

Gibt die Adresse des durch einen eintreffenden Trigger aufgerufenen Unterprogramms zurück.
jmp <adr>
Sprung nach Adresse
call <adr>
Sprung nach Adresse. Rücksprungadresse wird auf dem Stack gespeichert
jmp <cond> <adr>
Bedingter Sprung nach Adresse
call <cond> <adr>
Bedingter Sprung nach Adresse. Rücksprungadresse wird auf dem Stack gespeichert
ret
Rücksprung auf die auf dem Stack gespeicherte Rücksprungadresse

### mov <target> <source>

Überträgt ein Datenwort von Quelle (source) an ein Ziel (target). Quelle und Ziel können jeweils in einem Speicher oder eine Peripherieadresse sein.

Im wesentlichen sind die Befehle aus PACT10, d.h. der Beschreibung der CT bekannt. Wesentlicher Unterschied in der Implementierung der 2602 ist, daß nur sehr einfache Befehle zur Datenverwaltung verwendet werden und kein vollständiger Mikrokontroller verwendet wird.

Eine bedeutende Erweiterung des Befehlssatzes ist der "pabm"-Befehl zum Konfigurieren der PAEs. Es stehen zwei Befehle (pabmr, pabmm) zur verfügung, die folgendermassen aufgebaut sind:
a)

| pabmr | regno | count | |
|---|---|---|---|
| pa_adr₀ | | | pa_dta₀ |
| pa_adr₁ | | | pa_dta₁ |
| ... | | | ... |
| pa_adr_{count} | | | pa_dta_{count} |
| | | | |

| pabmm | 000 | count | |
|---|---|---|---|
| offset | | | |
| pa_adr₀ | | | pa_dta₀ |
| pa_adr₁ | | | pa_dta₁ |
| ... | | | ... |
| pa_adr_{count} | | | pa_dta_{count} |

b)

| pabmr | regno | count |
|---|---|---|
| memref | | |
| | | |

| pabmm | 000 | count |
|---|---|---|
| offset | | |
| memref | | |

Die Befehle kopieren einen zugeordneten Block von PAE-Adressen und PAE-Daten vom Speicher zu dem PAE-Array. Durch <count> ist angegeben, wie groß der zu kopierende Datenblock ist. Der Datenblock ist entweder direkt an den Opcode angehängt (a) oder durch Angabe der erste Speicheradresse <memref> referenziert (b).

Jede pa_adrₙ-pa_dtaₙ-Zeile stellt eine Konfiguration für eine PAE dar. Dabei gibt pa_adrₙ die Adresse und pa_dtaₙ das Konfigurationswort der PAE an.

Aus PACT10 ist das RDY/ACK-REJ Protokoll bekannt. Werden die Konfigurationsdaten von einer PAE angenommen, quittiert die PAE die gesendeten Daten mit einem ACK. Kann dagegen eine PAE die Konfigurationsdaten nicht annehmen, da sie sich nicht in einem umkonfigurierbaren Zustand befindet, sendet sie ein REJ zurück. Dadurch schlägt die Konfiguration des Teilalgorithmus fehl.
Die Stelle mit REJ zurückgewiesenen pa_adrₙ-pa_dtaₙ-Zeile wird gespeichert. Die Befehle werden zu einem späteren Zeitpunkt erneut aufgerufen (vgl. PACT10, FILMO). Sofern der Befehl komplett abgearbeitet wurde, d.h. es trat kein REJ auf, führt der Befehl keine weitere Konfiguration durch sondern terminiert sofort. Trat ein REJ auf, springt der Befehl direkt an die Stelle der zurückgewiesenen pa_adrₙ-pa_dtaₙ-Zeile. Je nach Befehl wird die Stelle unterschiedlich gespeichert: pabmr: Die Adresse wird in dem mit <regno> genannten Register gespeichert.
pabmm: Die Adresse wird direkt im Befehl an der Speicherstelle <offset> gepeichert.

Die Befehle sind durch DMA-Strukturen als Speicher/IO-Transfers nach dem Stand der Technik implementierbar. Die DMAs werden durch eine Logik zum überwachen der eingehenden ACK/REJ erweitert. Die Startadresse wird durch <regno>, bzw. <offset> bestimmt. Die letzte Adresse des Datenblocks wird durch die Adresse des Befehls plus dessen Opcode-Länge minus eins plus die Anzahl der pa_adrₙ-pa_dtaₙ-Zeilen berechnet.

Es ist sinnvoll auch die in PACT10 beschriebene Schaltung durch die genannten Befehle zu erweitern.

Figur 27 zeigt den Aufbau einer Einheit 2602. Die Einheit besteht aus einem Registersatz 2701 dem eine einfache ALU für Stackoperationen zugeordnet ist (2702). Die Struktur enthält Adressregister und Stackpointer. Optional kann eine vollwertige ALU eingesetzt werden. Ein Bussystem (2703) mit minimaler Breite verbindet Register und ALU. Die Breite ist dabei so bemessen, daß einfache Kontrollflußbefehle bzw. einfache ALU-Operationen sinnvoll dargestellt werden können. Zusätzlich werden die vorab beschriebenen PABM-Befehle, sowie die Befehle nach PACT10 unterstützt. Register und ALU werden von einem Sequenzer 2706 gesteuert, der durch Ausführung von Befehlen einen vollständigen Microcontroller darstellt.
An 2703 ist eine Einheit 2704 angeschlossen, die Trigger von den zugeordneten PAEs entgegennimmt und quittiert und gegebenenfalls ihrerseits Trigger an die PAEs sendet. Eingehende Trigger lösen dabei in dem Sequenzer 2706 einen Interrupt aus oder werden durch den WAIT-Befehl abgefragt. Optional an 2703 angeschlossen ist ein Interface (2705) zu einem Datenbus der zugeordneten PAEs um Daten an die PAEs senden zu können. Beispielsweise werden die Assemblercodes eines in den PAEs implementierten Sequenzers über 2705 gesendet. Das Interface enthält sofern erforderlich einen Konverter zur Anpassung der unterschiedlichen Busbreiten.
Die Einheiten 2701 bis 2706 sind über einen Multiplexer/Demultiplexer (2707) an ein um ein Vielfaches breiteres Bussystem (2708) angeschlossen, das zum Speicher (2709) führt. 2707 wird von den niederwertigen Adressen des Adress-/Stackregisters angesteuert, die höherwertigen Adressen führen direkt zum RAM (2711). Das Bussystem 2708 führt zu einem Interface (2709), das durch die PA-Befehle gesteuert wird und zum Konfigurationsbus der PAEs führt. 2708 ist bewußt breit ausgelegt um möglichst viele Konfigurationsbits pro Takteinheit über 2709 an die PAEs senden zu können. Ein weiteres Interface (2710) verbindet den Bus mit einer übergeordneten CT, die Konfigurations- und Steuerdaten mit 2602 austauscht. Die Interface 2710 und 2709 bereits mehrfach in PACT10, PACT?? beschrieben worden.
Wesentlich ist, daß 2706 einen reduzierten und auf die Aufgabe optimierten Minimalsbefehlssatz beherrscht, der vor allem auf die PA-Kommandos, Sprünge, Interrupts und Lookup-Befehle optimiert ist. Weiterhin ist das optimierte breite Bussystem 2708, das über 2707 auf ein schmales Bussystem übertragen wird von besonderer Bedeutung für die Umkonfigurationsgeschwindigkeit der Einheit.

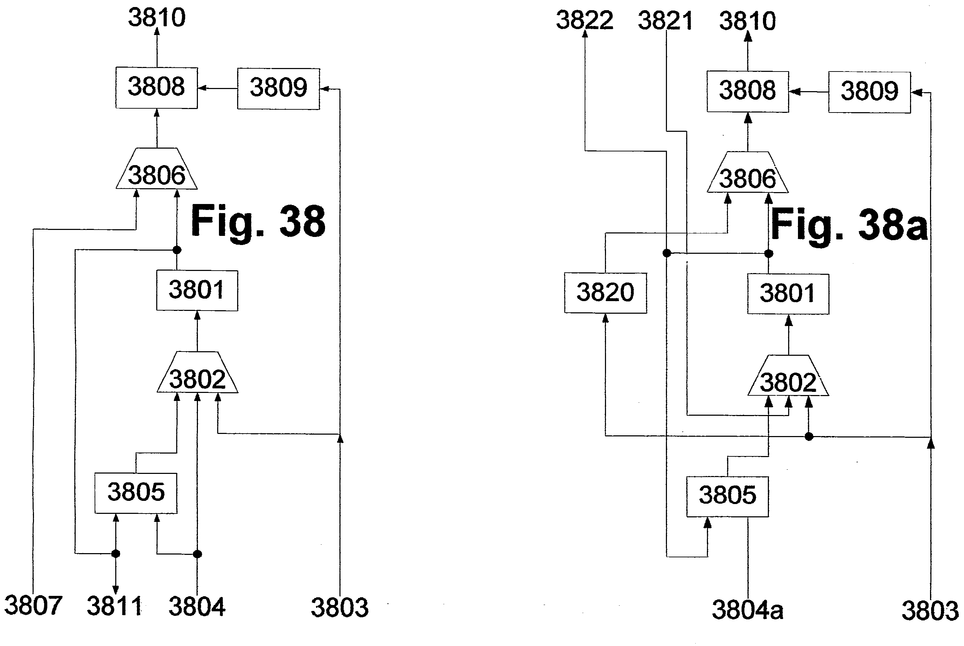

Figur 27a ist eine spezielle Ausgestaltung von Figur 27. Das Interface 2705 dient der Übertragung von Assemblercodes an im PAE-Array konfigurierte Sequenzer. Die Verarbeitungsleistung der Sequenzer hängt wesentlich von der Geschwindigkeit des Interfaces 2705 und dessen Speicherzugriffes ab. In Figur 27a ist 2705 durch eine DMA-Funktion mit direktem Speicherzugriff (2720ₙ) ersetzt. 2720ₙ führt eigene Speicherzugriffe aus und besitzt ein eigenes Bussystem (2722ₙ) mit entsprechender Anpassung der Busbreite (2721ₙ); dabei kann der Bus zum Laden von breiten Befehlssequenzen (ULIW) verhältnismäßig breit ausfallen, sodaß als Grenzfall 2721ₙ komplett entfällt. Zur weiteren Steigerung der Geschwindigkeit ist der Speicher 2711 physikalisch in 2711a und 2711bₙ getrennt worden. Der Adressraum über 2711a und 2711bₙ verbleibt linear, jedoch kann von 2701, 2702, 2706 auf beide Speicherblöcke unabhängig gleichzeitig zugegriffen werden; 2720ₙ kann nur auf 2711bₙ zugreifen. 2720ₙ, 2721ₙ und 2711bₙ kann mehrfach (ₙ) implementiert sein, damit mehrere Sequenzer gleichzeitig verwaltet werden können. Dazu kann 2711bₙ nochmals in mehrere physikalisch unabhängige Speicherbereiche unterteilt werden. In Figur 38 ist sind Implementierungsbeispiele für 2720ₙ beschrieben.

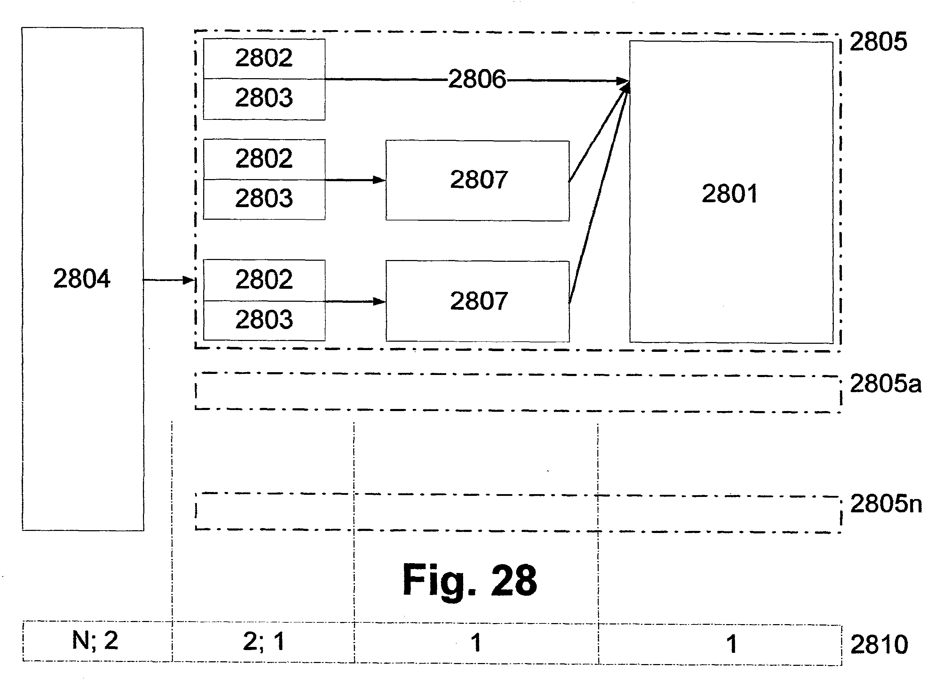

In Figur 28 wird der Aufbau von komplexen Programmen verdeutlicht. Die Basismodule der Programme sind die Komplex-Konfigurationen (2801) die die Konfigurationen einer oder mehrere PAEs und der dazugehörenden Bus- und Triggerkonfigurationen beinhalten. Die 2801 werden durch einen Opcode (2802) repräsentiert, der zusätzliche Parameter (2803) besitzen kann. Diese Parameter können einerseits konstante Datenwerte, variable Startwerte oder auch spezielle Konfigurationen beinhalten. Es existieren je nach Funktion ein, mehrere oder auch kein Parameter.
Mehrere Opcodes greifen auf einen gemeinsamen Satz von Komplex-Konfigurationen zurück und bilden damit eine Opcode-Gruppe (2805). Die unterschiedlichen Opcodes einer Gruppe unterscheiden sich durch besondere Ausgestaltungen der Komplex-Konfigurationen. Dazu werden Differenzierungen (2807) verwendet, die entweder zusätzliche Konfigurationsworte enthalten, oder in 2801 vorkommende Konfigurationsworte überschreiben.
Eine Komplex-Konfiguration wird, sofern keine Differenzierung erforderlich ist, direkt von einem Opcode aufgerufen (2806). Ein Programm (2804) setzt sich aus einer Abfolge von Opcodes mit den jeweiligen Parametern zusammen.
Eine komplexe Funktion kann einmal in das Array geladen werden und kann danach durch unterschiedliche Parameter oder Differenzierungen neu umkonfiguriert werden. Dabei werden nur die sich ändernden Teile der Konfiguration umkonfiguriert. Unterschiedliche Opcode-Gruppen greifen auf unterschiedliche Komplex-Konfigurationen zurück. (2805a,...,2805n).
Die unterschiedlichen Ebenen (Komplex-Konfiguration, Differenzierung, Opcode, Programm) werden in verschiedenen
Ebenen von CT's abgearbeitet (vgl. CT Hierarchien in PACT10). Die unterschiedlichen Ebenen sind in 2810 dargestellt, wobei 1. die niederste und N die höchste Ebene darstellt. CTs können zu beliebig tiefen Hierarchien aufgebaut werden (vgl. PACT10).

Es wird in 2801 unter zwei Arten von Codes unterschieden:
1. Konfigurationsworte, die einen Algorithmus auf das Array aus PAEs abbilden. Der Algorithmus kann dabei auch als Sequenzer ausgestaltet sein. Die Konfiguration erfolgt über die Schnittstelle 2709. Konfigurationsworte werden durch die Hardware definiert.
2. Algorithmusspezifische Codes, die von der möglichen Ausgestaltung eines Sequenzer oder Algorithmus abhängig sind. Diese Codes werden vom Programmierer oder Compiler definiert und dienen zur Ansteuerung eines Algorithmus. Ist beispielsweise ein Z80 als Sequenzer in die PAEs konfiguriert, stellen diese Codes den Opcode des Z80 Mikroprozessors dar. Algorithmusspezifische Codes werden über 2705 an das Array aus PAEs gesendet.

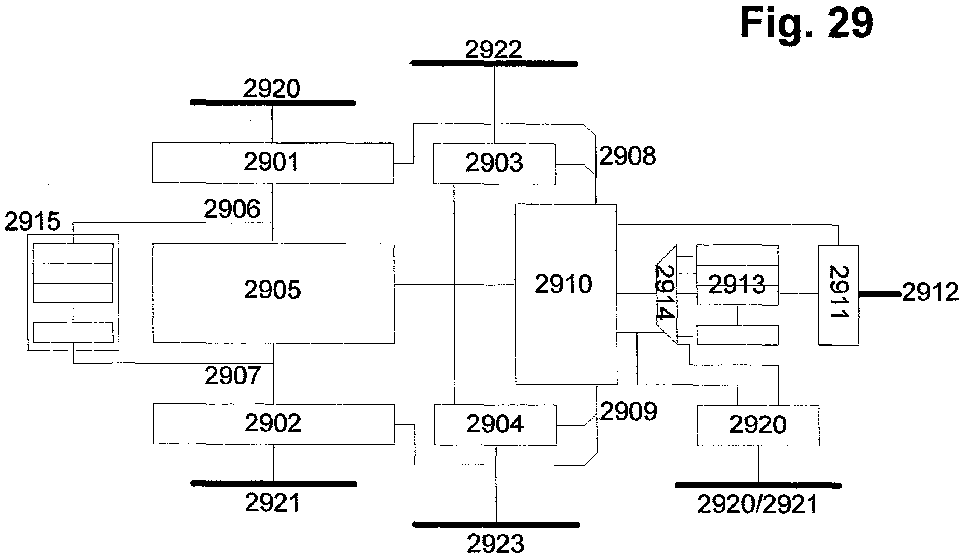

In Figur 29 ist ein möglicher Grundaufbau einer PAE dargestellt. 2901 bzw. 2902 stellen die Eingangs- bzw. Ausgangsregister der Daten dar. Den Registern zugeordnet ist die komplette Vernetzungslogik zum Aufschalten auf den/die Datenbus/se (2920, 2921) des Arrays (vgl PACT02). Die Triggerleitungen gem. PACT08 werden durch 2903 vom Triggerbus (2922) abgegriffen und mit 2904 auf den Triggerbus (2923) aufgeschaltet. Zwischen 2901 und 2902 ist eine ALU (2905) beliebiger Ausgestaltung geschaltet. Den Datenbussen (2906, 2907) und der ALU zugeordnet ist ein Registersatz (2915), in welchem lokale Daten gespeichert werden. Die RDY/ACK-Syncronisationssignale der Datenbusse und Triggerbusse werden zu einer Statemachine (oder einem Sequenzer) (2910) geführt (2908), bzw. von der Einheit generiert (2909).
Über eine Interfaceeinheit (2911) greift die CT mittels eines Bussystemes (2912) selektiv auf eine Mehrzahl von Konfigurationsregistern (2913) zu. 2910 wählt über einen Multiplexer (2914) jeweils eine bestimmte Konfiguration aus, oder sequenzt über eine Mehrzahl von Konfigurationswörten, die dann Befehle für den Sequenzer darstellen.
Da die VPU-Technologie hauptsächlich gepipelinet arbeitet ist es von Vorteil entweder die Gruppe 2901 und 2903 oder die Gruppe 2902 und 2904 oder beide Gruppen zusätzlich mit FIFOs zu versehen. Dadurch kann verhindert werden, daß eine Pipeline durch einfache Verzögerungen (z.B. in der Synchronisation) stockt.
2920 ist ein optionaler Buszugang, über den ein der Speicher einer CT (siehe Fig. 27, 2720) oder ein gewöhnicher interner Speicher an Stelle der Konfigurationsregister an den Sequenzer 2910 geschaltet werden kann. Damit sind große sequentielle Programme in einer PAE ausführbar. Der Multiplexer 2914 wird dazu so geschaltet, daß er nur den internen Speicher verbindet.
Die Adressen werden
a) für den CT-Speicher durch die Schaltung in Fig. 38 generiert.
b) für den internen Speicher direkt von 2910 generiert.

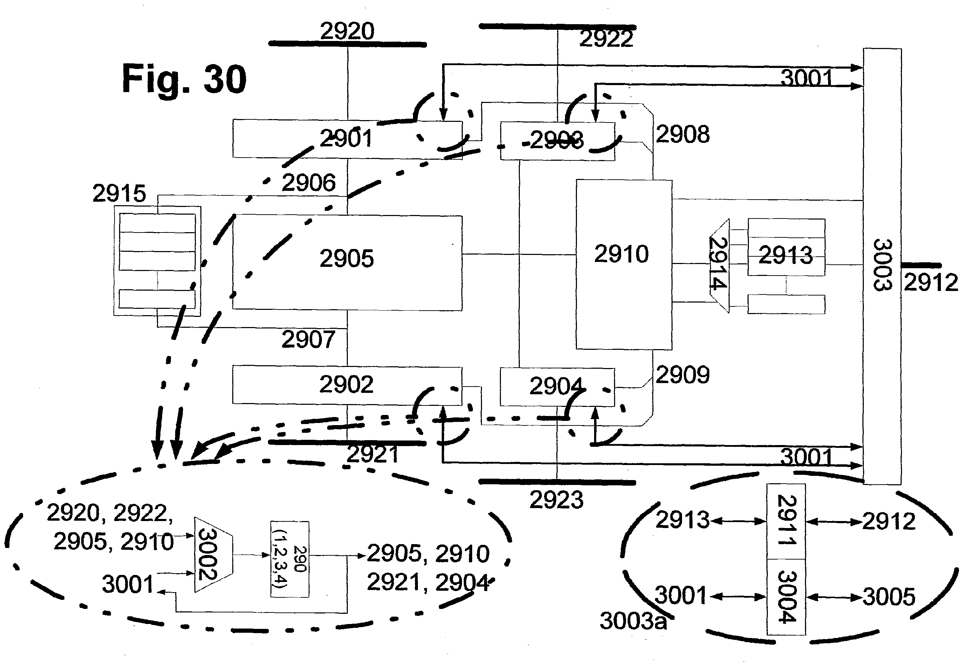

Figur 30 zeigt eine mögliche Erweiterung der PAE um der CT oder einem anderen zuegschalteten Mikroprozessor einen Zugriff auf die Datenregister zu ermöglichen. Der Adressraum und die Interface der Buseinheit (vormals 2911, 3003) werden um die zusätzlichen Datenbusse (3001) erweitert. Den jeweiligen Registern wird ein Multiplexer (3002) vorgeschaltet mittles dem 3003 über den Bus 3001 Daten in das Register schreiben kann. Die Ausgänge der Register werden über 3001 zurück an 3003 geführt. 3003 überträgt die Daten zur CT 2912. Alternativ (3003a) zur Übertragung der Daten zu CT ist es möglich die Daten durch ein zusätzliches Interface (3004) auf einen von der CT unabhängigen Bus (3005) zu übertragen.

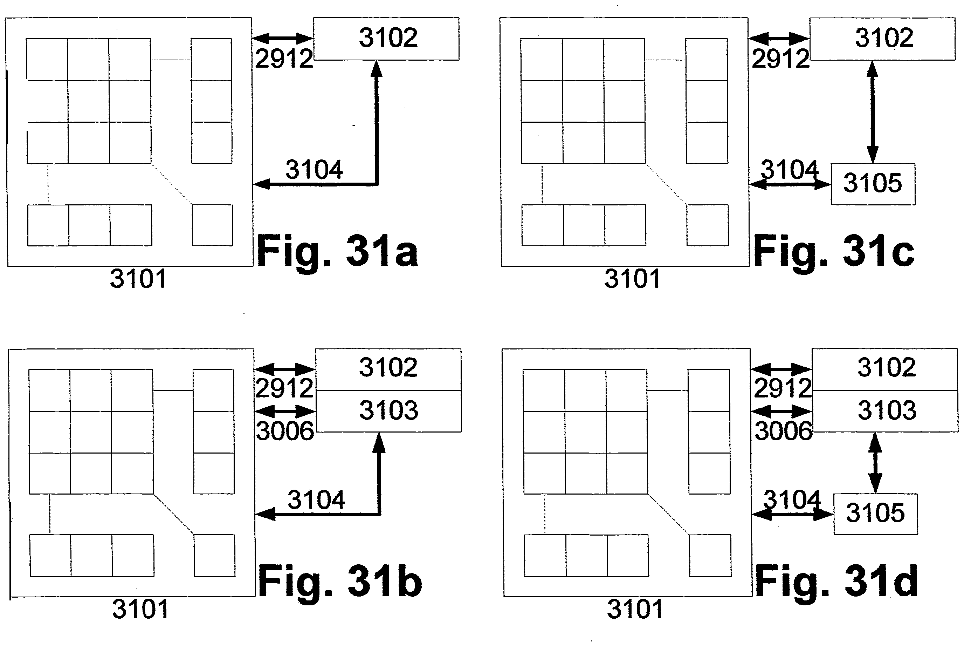

Figur 31 zeigt die Kopplung des Arrays von PAEs (3101) mit einem übergeordneten Mikrokontroller. 3101 beinhaltet sind sämtliche IO-Kanäle gemäß den erfindungsgemäßen Speichern. Die Architektur arbeitet gemäß Figur 23. 2912 in Figur 31a stellt den Bus für die Konfigurationsdaten und Registerdaten gem. Figur 30 zur Verfügung. Der Datenbus wird separat durch 3104 dargestellt. 3102 stellt die CT dar, die in Fig. 31a auch den Mikroprozessor darstellt.

Für sämtliche Bussysteme bestehen unabhängig voneinander folgende Anschlußmodelle an einen Prozessor, die je nach Programmiermodell und unter Abwägung von Preis und Performance gewählt werden:

### 1. Register-Modell

Beim Register-Modell wird der jeweilige Bus über ein Register angesprochen, das direkt in den Registersatz des Prozessors integriert ist und vom Assembler als Register oder Gruppe von Registern angesprochen wird. Dieses Modell ist am effizientestens wenn einige wenige Register für den Datenaustausch ausreichen.

### 2. IO-Modell

Der jeweilige Bus liegt im IO-Bereich des Prozessors. Dies ist meistens die einfachste und kostengünstigste Variante.

### 3. Shared-Memory-Modell

Der Prozessor und der jeweilige Bus teilen sich einen Speicherbereich im Datenspeicher. Für große Datenmengen ist das eine performante Lösung.

### 4. Shared-Memory-DMA-Modell

Prozessor und Bus teilen sich wie im vorigen Modell denselben Speicher. Zur weiteren Geschwindigkeitssteigerung existiert eine schnelle DMA (vgl. Figur 38)
die den Datenaustausch zwischen Bus und Speicher übernimmt.

Zur Steigerung der Übertragungsgeschwindigkeit sollten die jeweiligen Speicher physikalisch vom übrigen Speicher trennbar sein (mehrere Speicherbanke), damit Prozessor und VPU unabhängig auf ihre Speicher zugreifen können.

In Figur 31b übernimmt eine CT (3102) die Konfiguration des Arrays, während ein dedizierter Prozessor (3103) über 3006 das Programmiermodell nach Fig. 23 gewährleistet, indem er über 3006 Registerdaten mit dem Array austauscht und über 3104 die gewöhnlichen Daten austauscht.
Die Figuren 31c/d entsprechen den Figuren 31a/b, jedoch wurde für den Datenaustausch ein Shared-Memory (3105) zwischen dem jeweiligen Prozessor und 3101 gewählt.

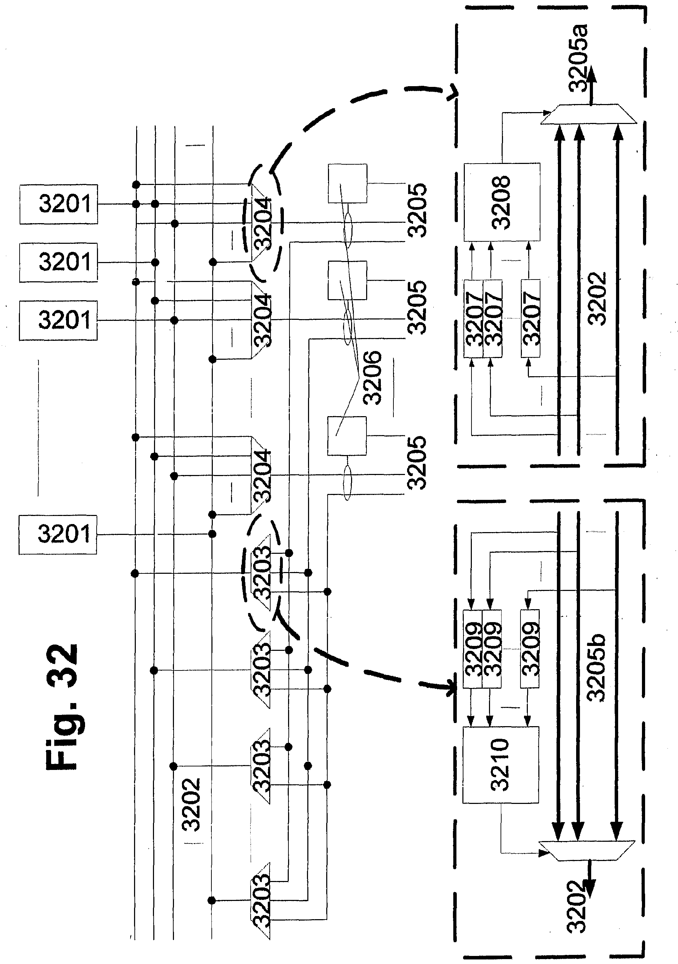

Figur 32 zeigt eine Schaltung die es den erfindungsgemäßen Speicherelementen ermöglicht gemeinsam auf einen Speicher oder eine Gruppe von Speichern zuzugreifen, wobei jeder einzelne Speicher der Gruppe einzeln und eindeutig adressierbar ist. Dazu werden die einzelnen Speicherelemente (3201) auf ein Bussystem geschaltet, bei dem jedes 3201 einen eigenen Bus besitzt. Der Bus kann bidirektional augestaltet sein oder durch zwei unidirektionale Busse realisiert werden. Pro Speicher existiert ein Adress/Datenmultiplexer, der einen Bus zum Speicher durchschaltet. Dazu werden die anliegenden Adressen jedes Busses dekodiert (3207) und danach jeweils ein Bus pro Zeiteinheit durch einen Arbiter (3208) ausgewählt (3204). Die entsprechenden Daten und Adressen werden auf den jeweiligen Speicherbus (3205a) übertragen, wobei eine Zustandsmaschine (3206) die notwendigen Protokolle generiert. Treffen bei einer Leseanforderung die Daten vom Speicher ein, wird durch die jeweilige Zustandsmaschine die Adresse des Speichers auf den Bus geschaltet, der die Daten anfragte. Die Adressen aller eingehenden Busse werden pro Bus des Bussystems 3202 durch eine Multiplexereinheit ausgewertet und auf den entsprechenden Bus übertragen. Die Auswertung erfolgt entsprechend der Auswertung der Ausgangsdaten, d.h. ein Dekoder (3209) je Eingangsbus (3205b) leitet ein Signal auf einen Arbiter (3210), der den Daten-Multiplexer ansteuert. Damit werden pro Zeiteinheit unterschiedliche Eingangsbusse auf das Bussystem 3202 geleitet.

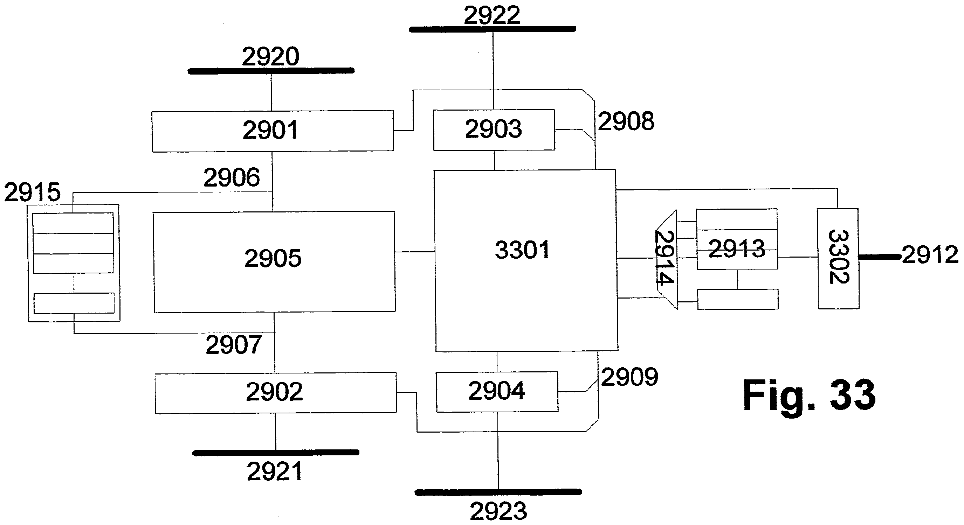

In Figur 33 wird zur flexibleren und einfacheren Auswertung der Trigger- und RDY/ACK-Signale die starre Statemachine / der starre Sequenzer 2910 durch einen frei programmierbaren (3301) ersetzt. Die vollständige Funktion von 3301 wird durch die Konfigurationsregister 2913 vor der Ausführung von Algorithmen durch die CT bestimmt. Das Laden von 3301 wird durch ein gegenüber 2911 um die Verwaltung von 3301 erweitertes CT-Interface (3302) gesteuert. Der Vorteil von 3301 liegt darin, daß erheblich flexibler mit den unterschiedlichen Trigger- und RDY/ACK-Signalen umgegangen werden kann, als in fest implementierten 2910. Nachteilhaft wirkt sich die Größe eines von 3301 aus.

Ein Kompromiß der zu der höchsten Flexibilität bei vertretbarer Größe führt ist, die Trigger und RDY/ACK-Signale durch eine Einheit gemäß 3301 auszuwerten und sämtliche festen Abläufe innerhalb der PAE durch eine fest implementierte Einheit nach 2910 zu steuern.

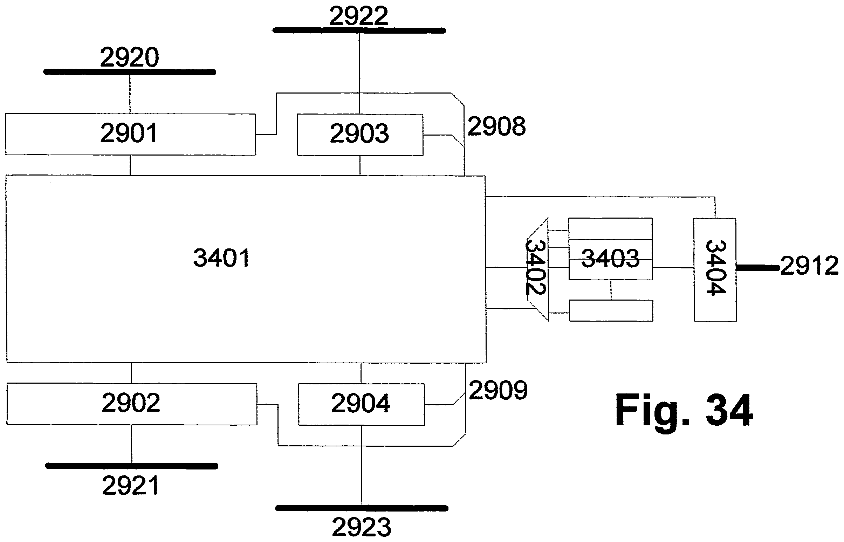

Die erfindungsgemäße PAE zur Verarbeitung von logischen Funktionen ist in Figur 34 abgebildet. Kern der Einheit ist eine nachfolgend detaillierter beschriebene Einheit zum verknüpfen von einzelnen Signalen (3401). Über die üblichen Register 2901, 2902, 2903, 2904 werden die Bussignale mit 3401 verbunden. Die Register werden hierzu um einen Feld-Code erweitert, der einzelne Signale selektiv ohne sie taktsynchron zu speichern (register) zwischen den Bussen und 3401 austauscht. Der Multiplexer (3402) und die Konfigurationsregister (3403) werden an die unterschiedlichen Konfigurationen von 3401 angepaßt. Ebenso ist das CT-Interface (3404) entsprechend ausgestaltet.

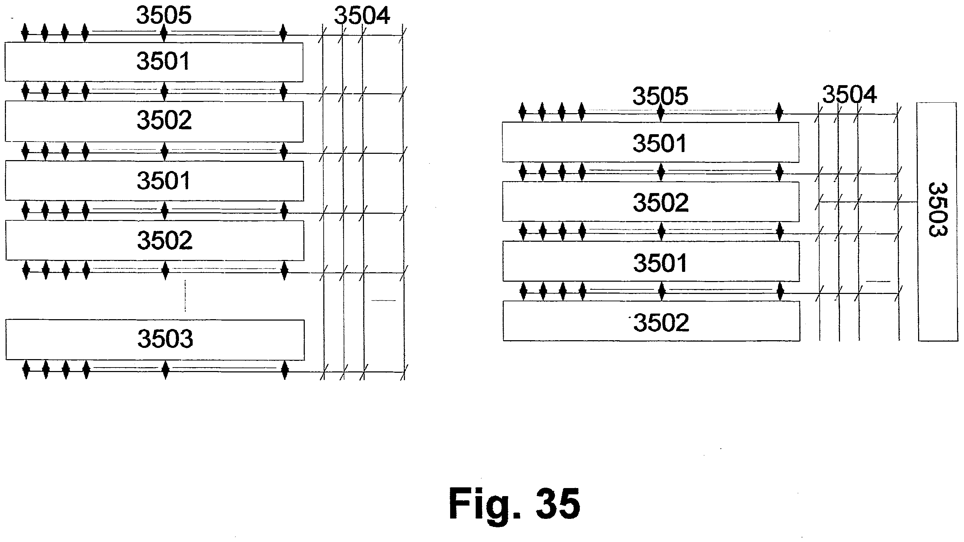

Figur 35 zeigt mögliche Ausgestaltungen von 3401. Ein globaler Datenbus verbindet die Logikzellen 3501 und 3502 mit den Registern 2901, 2902, 2903, 2904. Durch Busschalter, die als Multiplexer, Gatter, Transmissiongates oder einfachen Transistoren ausgelegt sein können wird 3504 mit den Logikzellen verbunden. Die Logikzellen können entweder komplett einheitlich gestaltet sein, oder unterschiedliche Funktionalität besitzen (3501, 3502). 3503 stellt einen RAM-Speicher dar.
Mögliche Ausgstaltung der Logikzellen sind:
- Lookup Tabellen
- Logik
- Multiplexer
- Register

Die Auswahl der Funktionen und Vernetzung kann entweder flexibel programmierbar durch SRAM-Zellen erfolgen oder mittels unveränderlicher ROM oder semistatischer FlashROM Speicher.

Zur Beschleunigung von sequentiellen Algorithmen, die schlecht parallelisiert werden können ist bei herkömmlichen Prozessoren spekulative Ausführung bereits Stand der Technik. Die parallele Variante für VPUs ist in Figur 36 dargestellt. Die Operanden (3601) werden gleichzeitig an mehrere möglichen Pfade von Teilalgorithmen (3602a, 3602b, 3602c) geführt. Die Teilagorithmen können dabei einen unterschiedlichen Flächen- und Zeitbedarf aufweisen. Jeweils nach den Teilalgorithmen werden die Daten erfindungsgemäß gespeichert (3612a, 3612b, 3612c), bevor sie nach einer Umkonfiguration von den nächsten Teilalgorithmen verarbeitet werden (3603). Auch die Umkonfigurationszeitpunkte der einzelnen Teilalgorithmen sind voneinander unabhängig, ebenso die Zahl der Teilalgorithmen selbst (3603, 3614). Sobald entscheidbar ist, welcher der Pfade zu wählen ist, werden die Pfade über einen Bus oder Multiplexer zusammengeführt (3605). Von einer Bedingung generierte Triggersignale (vgl. PACT08) (3606) bestimmen welcher der Pfade gewählt und an die nachfolgenden Algorithmen weitergeleitet wird.

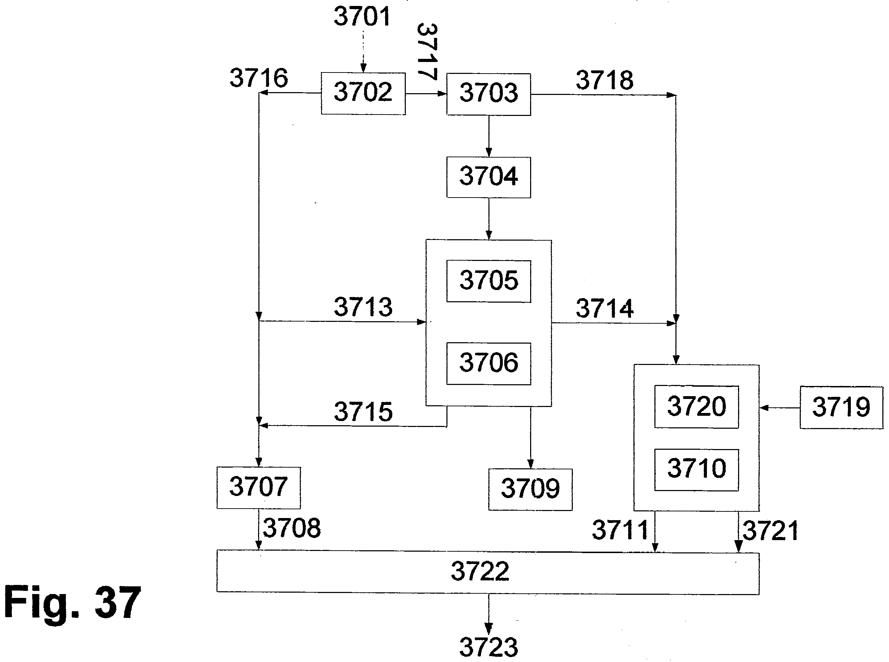

Figur 37 zeigt den Aufbau eines Hochsprachencompilers, der gewöhnliche sequentielle Hochsprachen (C, Pascal, Java) auf ein VPU-System übersetzt. Sequentieller Code (3711) wird von parallelem Code (3708) getrennt, wodurch 3708 direkt in dem Array von PAEs verarbeitet wird.
Für 3711 gibt es drei Ausführungsmöglichkeiten:
1. Innerhalb eines Sequenzers einer PAE (2910)
2. Mittels eines in die VPU konfigurierten Sequenzers. Der Compiler erzeugt hierzu einerseits einen auf die Aufgabe optimierten Sequenzer, andererseits direkt den algorithmenspezifischen Sequenzercode (vgl. 2801).
3. Auf einem gewöhnlichen externen Prozessor (3103)
   Welche Möglichkeit gewählt wird hängt von der Architektur der VPU, des Computersystems und des Algorithmus ab.

Der Code (3701) wird zunächst in einem Präprozessor (3702) in Datenflußcode (3716) (der in einer speziellen Version der jeweiligen Programmiersprache datenflußoptimiert geschrieben wurde) und gewöhnlichen sequentiellen Code getrennt (3717). 3717 wird auf parallelisierbare Teilalgorithmen untersucht (3703), die sequentiellen Teilalgorithmen werden ausgesondert (3718). Die parallelisierbaren Teilalgorithmen werden als Makros vorläufig plaziert und geroutet.
In einem iterativen Prozess werden die Makros mit dem datenflußoptimierten Code (3713) zusammen plaziert, geroutet und partitioniert (3705). Eine Statistik (3706) wertet die einzelnen Makros, sowie deren Partitionierung hinsichtlich der Effizienz aus, wobei die Umkonfigurationszeit und der Aufwand der Umkonfiguration in die Effizienzbetrachtung einfließt. Ineffiziente Makros werden entfernt und als sequentieller Code ausgesondert (3714).
Der verbleibende parallele Code (3715) wird zusammen mit 3716 compiliert und assembliert (3707) und VPU Objektcode ausgegeben (3708).
Eine Statistik über die Effizienz des generierten Codes, sowie der einzelnen (auch der mit 3714 entfernten Makros) wird ausgegeben (3709), der Programmierer erhält dadurch wesentliche Hinweise auf Geschwindigkeitsoptimierungen des Programmes.

Jedes Makro des verbleibenden sequentiellen Codes wird auf seine Komplexität und Anforderungen untersucht (3720). Aus einer Datenbank die von der VPU-Architektur und dem Computersystem abhängt (3719) wird der jeweils geeignete Sequenzer ausgewählt und als VPU-Code (3721) ausgegeben. Ein Compiler (3721) generiert den Assemblercode des jeweiligen Makros für den jeweils von 3720 gewählten Sequenzer und gibt ihn aus (3711). Die 3710 und 3720 sind eng miteinander verknüpft. Gegebenenfalls verläuft die Abarbeitung iterativ um den geeignetsten Sequenzer mit minimalsten und schnellsten Assemblercode zu finden.
Ein Linker (3722) faßt die Assemblercodes (3708, 3711, 3721) zusammen und generiert den ausführbaren Objektcode (3723).

Figur 38 zeigt den internen Aufbau von 2720. Kern der Schaltung ist ein ladbarer Up/Down-Zähler (3801), der seinen Startwert von der Schaltung Fig. 27 von dem Bus 3803 (entspricht 2703) über den entsprechend gesetzten Multiplexer 3802 erhält. Der Zähler dient als Programmzähler (PC) für den zugeordneten Sequenzer, der Startwert ist die erste Adresse des auszuführenden Programmes. Der Wert von 3801 wird über einen Addierer (3805) und 3802 auf den Zähler zurückgeführt. Über den Bus 3804 wird von dem Sequenzer ein Offset an 3805 geführt, der entweder vom PC abgezogen oder hinzuaddiert wird. Damit sind relative Sprünge effizient implementierbar. Der PC wird über den Bus 3811 an das PAE-Array herausgeführt und kann für call -Operationen auf dem Stack gespeichert werden. Für ret-Operationen wird der PC über 3804 und 3802 vom Stack auf 3801 geführt.
Über den Multiplexer 3806 wird entweder der PC oder ein vom PAE-Array zugeführter Stackpointer (3807) auf einen Addierer (3808) geführt. Hier wird ein Offset den Werten abgezogen oder hinzuaddiert, der im Register 3809 gespeichert wird und über 3803 geschrieben wird. 3808 ermöglicht die Verschiebung des Programmes innerhalb des Speicher 2711. Dadurch werden Garbage-Collector Funktionen zum Aufräumen des Speichers möglich (vgl. PACT10). Die Adressverschiebung die durch den Garbage-Collector auftritt wird durch eine Anpassung des Offsets in 3809 ausgeglichen.
Figur 38a ist eine Variante von Figur 38 in der der Stackpointer (3820) ebenfalls integriert ist. Über 3804 wird nur noch der Offset für relative Sprünge an 3805 geführt (3804a). Der Stackpointer ist ein Up/Down-Zähler entsprechend 3801, dessen Startwert der den Beginn des Stack repräsentiert, und über 3803 geladen wird. Der PC wird direkt an den Datenbus zum Speicher geführt um über einen Multiplexer bei call-Operationen auf den Stack geschrieben zu werden. Der Datenbus des Speichers wird über 3821 und 3802 auf 3801 zurückgekoppelt, zur Durchführung von ret-Operationen.

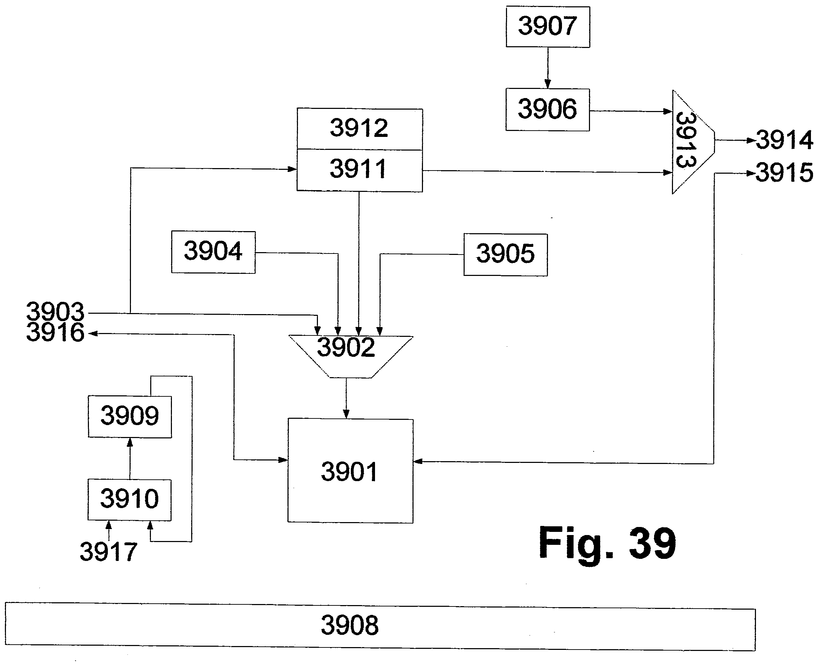

Figur 39 verdeutlicht die Funktionsweise der Speicher. Der Speicher (3901) wird über einen Multiplexer (3902) adressiert. Im Standard-Modus, Lookup-Modus und Register Modus werden die Adressen aus dem Array (3903) direkt an 3901 geführt. Im Stack-Modus und FIFO-Modus werden die Adressen in einem up/down-Zähler (3904) generiert. In diesem Fall werden die Adressen der IO-Seite von einem weiteren up/down-Zähler (3905) zur Verfügung gestellt. Die Adressen für den externen RAM (oder IO) werden von einem weiteren up/down-Zähler (3906) generiert, die Basisadresse wird von einem Register (3907) geladen. Das Register wird von der CT oder einem externen Host-Prozessor gesetzt. Die gesamte Steuerung übernimmt eine Statemachine (3908). Den Zustand des Speichers (voll, leer, halbvoll, etc) entnimmt 3908 einem up/down-Zähler (3909) der die Anzahl der im Speicher befindlichen Worte zählt. Wird der Speicher blockweise verändert (Stack auf externen Stack schreiben oder von externem Stack lesen) wird die Größe des Blocks als Konstante (3917) auf einen Addierer/Subtrahierer (3910) gegeben, auf den der Zählerstand von 3909 zurückgekoppelt ist. Das Ergebnis wird nach 3909 geladen. Damit läßt sich der Zählerstand schnell an blockweise Veränderungen anpassen. (Natürlich ist es möglich den Zähler auch mit jedem geschriebenen oder gelesenen Wort bei einer Blockoperation zu modifizieren). Für Cache-Operationen steht ein Cache-Kontroller (3911) nach dem Stand der Technik zur Verfügung, dem ein Tag-Speicher (3912) zugeordnet ist. Je nach Betriebsart wird der Wert von 3911 oder 3906 über einen Multiplexer (3913) als Adresse nach außen geführt(3914). Über den Bus 3915 werden die Daten nach außen geführt und über den Bus 3916 werden die Daten mit dem Array ausgetauscht.

### Programmierbeispiele zur Verdeutlichung von Teilalgorithmen

Ein Modul kann beispielsweise folgendermaßen deklariert werden: 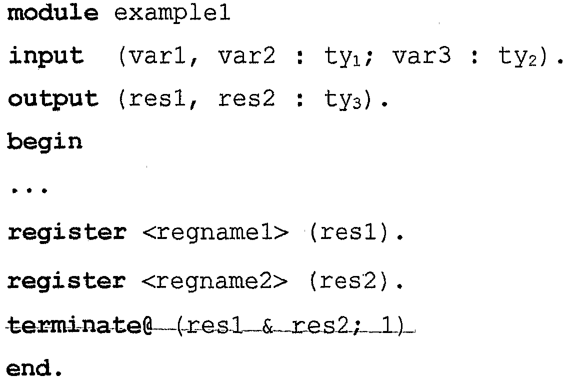 **module** kennzeichnet den Beginn eines Modules.
**input/output** definiert die Ein-/Ausgangsvariablen mit den Typen tyₙ.
**begin** ... **end** markieren den Rumpf des Modules.

**register** <regname1/2> übergibt das Ergebnis an den Output, wobei des Ergebnis in dem durch <regname1/2> spezifizierten Register zwischengespeichert wird. <regnamel/2> ist dabei eine globale Referenz auf ein bestimmtes Register.

Als weitere Übergabemodi an den Output stehen beispielsweise folgende Speicherarten zur Verfügung:
**fifo** <fifoname>, wobei die Daten an einen nach dem FIFO-Prinzip arbeitenden Speicher übergeben werden. <fifoname> ist dabei eine globale Referenz auf einen bestimmten, im FIFO-Modus arbeitenden Speicher. **terminate@** wird dabei um den Parameter bzw. das Signal "fifofull" erweitert, der/das anzeigt, daß der Speicher voll ist.
**stack** <stackname>, wobei die Daten an einen nach dem Stack-Prinzip arbeitenden Speicher übergeben werden. <stackname> ist dabei eine globale Referenz auf einen bestimmten, im Stack-Modus arbeitenden Speicher.

**terminate@** unterscheidet die Programmierung entsprechend des erfindungsgemäßen Verfahrens von der herkömmlichen sequentiellen Programmierung. Der Befehl definiert das Abbruchkriterium des Modules. Die Ergebnisvariablen res1 und res2 werden von terminate@ nicht mit ihrem tatsächlichen Wert evaluiert, statt dessen wird nur die Gültigkeit der Variablen (also deren Statussignal) geprüft. Dazu werden die beiden Signale res1 und res2 boolsch miteinander verknüpft z.B. durch eine UND-, ODER- oder XOR-Operation. Sind beide Variablen gültig, terminiert das Modul mit dem Wert 1. Das bedeutet, ein Signal mit dem Wert 1 wird an die übergeordneten Ladeeinheit weitergeleitet, woraufhin die übergeordneten Ladeeinheit das nachfolgende Module lädt. 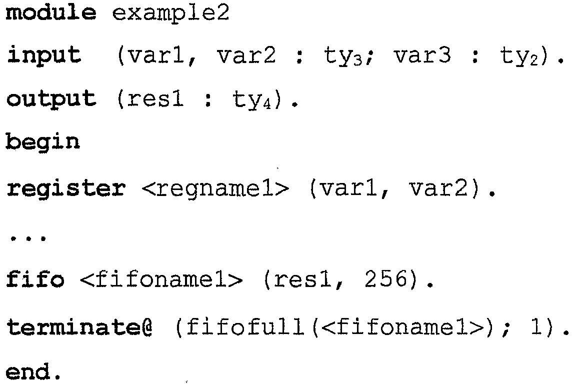 **register** wird in diesem Beispiel über input-Daten definiert. Dabei ist <regname1> derselbe wie in example1. Dies bewirkt, daß das Register, das die output-Daten in example1 aufnimmt, die input-Daten für example2 zur Verfügung stellt.

**fifo** definiert einen FIFO-Speicher der Tiefe 256 für die Ausgangsdaten resl. Das Full-Flag (fifofull) des FIFO-Speichers wird in **terminate@** als Abbruchkriterium verwendet. 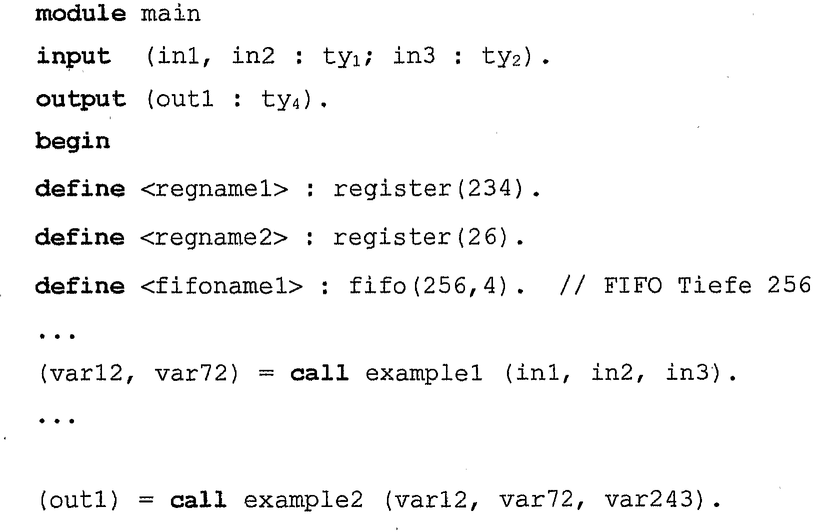 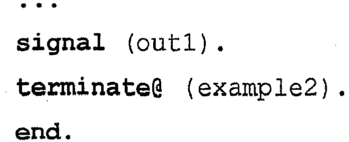 **define** definiert eine Schnittstelle für Daten (Register, Speicher, etc). Bei der Definition werden die erforderlichen Ressourcen, sowie die Bezeichnung der Schnittstelle angegeben. Da die Ressourcen jeweils nur einmal zur Verfügung stehen, müssen sie eindeutig angegeben werden. Damit ist die Definition global, d.h. die Bezeichnung gilt für das gesamte Programm.

**call** ruft ein Modul als Unterprogramm auf.

**signal** definiert ein Signal als Ausgangssignal, ohne daß eine Zwischenspeicherung verwendet wird.

Durch **terminate@** (example2) wird das Modul main terminiert, sobald das Unterprogramm example2 terminiert.

Durch die globale Deklaration "define ..." ist es prinzipiell nicht mehr notwendig, die so definierten input/output Signale in die Schnittstellen-Deklaration der Module aufzunehmen.

## Patentansprüche

1. Verfahren
zur Programmierung und Betrieb von
durch Umkonfiguration
rekonfigurierbaren Bausteinen
mit
ein- oder mehrdimensionaler
Zellstruktur
unter Verwendung eines Hochsprache-Programms,
wobei
zumindest ein Sequenzer in die Zellstruktur konfiguriert wird,
und wobei das Verfahren die Schritte umfasst, dass mittels Compiler
ein Datenfluss- und
ein Kontrollflussgraph des Hochsprache-Programms extrahiert werden
und
zur Zerlegung
der Datenfluss- und Kontrollflussgraphen in Teilgraphen
zu dem Kontrollflussgraphen Statussignale
die geeignet sind,
die Gültigkeit einer Verarbeitung anzuzeigen
und/oder
zur Umkonfigurationsauslösung
an eine der Zellstruktur übergeordnete Einheit, die die Zellstrukturumkonfiguration steuert,
geführt zu werden,
bestimmt werden,
und wobei
zur Entkopplung der Teilgraphen
eine Speicherung der
in Teilgraphen generierten datenbezogenen Statussignale
für das Auslesen
durch nachfolgende Teilgraphen
vorgesehen wird
und
die Teilgraphen
unter Berücksichtigung übertragener Statussignale entkoppelt
mit dem oder den rekonfigurierbaren Baustein(en)
abgearbeitet werden, wobei die Teilgraphen
des Datenflussgraphen auf der Zellstruktur
abgearbeitet werden und die Teilgraphen des
Kontrollflussgraphen auf dem zumindest einen
einkonfigurierten Sequenzer abgearbeitet werden.

2. Verfahren nach dem vorhergehenden Anspruch, wobei innerhalb eines Teilgraphen Statussignale zwischen dessen Knoten übertragen werden, die den Zustand jedes einzelnen Knotens jedem anderen Knoten soweit zur Verfügung stellen.

3. Verfahren nach einem der vorhergehenden Ansprüche, wobei eine Menge von Statussignalen an die übergeordnete Einheit geführt wird, um eine Umkonfiguration auszulösen.

4. Verfahren nach einem der vorhergehenden Ansprüche, wobei eine Menge von Statussignalen an die übergeordnete Einheit geführt wird, um einen Zustand an einen nicht in die Zellstruktur geladenen Teilgraphen zu übermitteln.

5. Verfahren nach einem der vorhergehenden Ansprüche, wobei die Teilgraphen über mehrere Bausteine verteilt werden.

6. Verfahren nach einem der vorhergehenden Ansprüche, wobei die Graphen derart in mehrere Teilgraphen zerlegt werden, dass möglichst wenige Verbindungen zwischen den Teilgraphen bestehen.

7. Verfahren nach einem der vorhergehenden Ansprüche, wobei die Graphen derart in mehrere Teilgraphen zerlegt werden, dass möglichst wenige Daten zwischen den Teilgraphen
übertragen werden.

8. Verfahren nach einem der vorhergehenden Ansprüche, wobei die Graphen derart in mehrere Teilgraphen zerlegt werden, dass möglichst keine Rückkoppelungen zwischen den Teilgraphen bestehen.

9. Verfahren nach einem der vorhergehenden Ansprüche, wobei die Graphen derart in mehrere Teilgraphen zerlegt werden, dass die Teilgraphen jeweils möglichst exakt den Ressourcen des Bausteines angepasst sind.

10. Verfahren nach einem der vorhergehenden Ansprüche, wobei zwischen den Teilgraphen Speicherelemente zur Sicherung der Daten und Zustände eingeführt werden.

11. Verfahren nach einem der vorhergehenden Ansprüche, wobei mehrere Pfade einer Anweisung, von denen je nach Auswertung der Anweisung (IF, CASE) immer exakt einer ausgeführt wird, derart zerlegt werden, dass jeder Pfad einen Teilgraph ergibt.

## Claims

1. Method for programming and operating modules,
which can be reconfigured by means of reconfiguration and have a one-dimensional or multidimensional cell structure,
using a high-level language program,
wherein
at least one sequencer is configured into the cell structure,
and wherein the method comprises the steps, that
a data flow graph and a control flow graph of the high-level language program are extracted by means of a compiler,
and,
in order to break the data flow and control flow graphs down into subgraphs
for the control flow graph, status signals which are suitable
for indicating the validity of a processing and/or
for being passed for initiation of a reconfiguration, to a unit which is superordinate to the cell structure and controls the cell structure reconfiguration
are determined,
and, in order to decouple the subgraphs, provision is made for the data-related status signals generated in subgraphs to be stored in order to be read by subsequent subgraphs, and
the subgraphs are executed in a decoupled manner with the reconfigurable module(s) taking into account transmitted status signals,
the subgraphs of the data flow graph being executed on the cell structure and the subgraphs of the control flow graph being executed on the at least one sequencer which has been configured in.

2. Method according to the preceding claim, wherein within a subgraph status signals are transmitted between the nodes thereof, providing insofar status signals of every single node to every other node.

3. Method according to one of the preceding claims, wherein a multitude of status signals are passed to the superordinate unit in order to initiate a reconfiguration.

4. Method according to one of the preceding claims, wherein a multitude of status signals is passed to the superordinate unit in order to communicate a state to a subgraph which has not been loaded into the cell structure.

5. Method according to one of the preceding claims, wherein the subgraphs are distributed across a plurality of modules.

6. Method according to one of the preceding claims, wherein the graphs are broken down into a plurality of subgraphs in such a manner that there are as few connections as possible between the subgraphs.

7. Method according to one of the preceding claims, wherein the graphs are broken down into a plurality of subgraphs in such a manner that as few data as possible is transmitted between the subgraphs.

8. Method according to one of the preceding claims, wherein the graphs are broken down into a plurality of subgraphs in such a manner that as far as possible there is no feedback between the subgraphs.

9. Method according to one of the preceding claims, wherein the graphs are broken down into a plurality of subgraphs in such a manner that the subgraphs are each adapted as exactly as possible to the resources of the module.

10. Method according to one of the preceding claims, wherein storage elements for saving the data and states are inserted between the subgraphs.

11. Method according to one of the preceding claims, wherein a plurality of paths of an instruction, exactly one of which is always executed depending on the evaluation of the instruction (IF, CASE), are broken down in such a manner that each path results in a subgraph.

## Revendications

1. Procédé pour la programmation et l'exploitation de blocs reconfigurables par reconfiguration avec une structure cellulaire unidimensionnelle ou multidimensionnelle en utilisant un programme à langage évolué,
dans lequel au moins un séquenceur est configuré dans la structure cellulaire, et dans lequel le procédé comprend les étapes en ce que, au moyen d'un compilateur, un graphe de flux de données et de flux de contrôle du programme à langage évolué sont extraits, et en ce que, pour la décomposition des graphes de flux de données et de flux de contrôle en graphes partiels on détermine, pour les graphes de flux de contrôle, des signaux d'état, lesquels conviennent pour indiquer la validité d'un traitement et/ou lesquels, pour le déclenchement d'une reconfiguration, sont amenés vers une unité de niveau supérieur à la structure cellulaire qui commande la reconfiguration de structure cellulaire,
et dans lequel, pour le découplage des graphes partiels, on prévoit un enregistrement des signaux d'état relatifs à des données générés dans des graphes partiels pour l'extraction par des graphes partiels suivants, et en tenant compte de signaux d'état transmis, les graphes partiels étant exécutés de manière découplée avec le ou les bloc(s) reconfigurable(s), dans lequel les graphes partiels du graphe de flux de données sont exécutés sur la structure cellulaire et les graphes partiels du graphe de flux de contrôle étant exécutés sur l'au moins un séquenceur configuré.

2. Procédé selon la revendication précédente, dans lequel, à l'intérieur d'un graphe partiel, des signaux d'état sont transmis entre les noeuds de celui-ci, lesquels mettent à disposition dans une certaine mesure l'état de chaque noeud individuel pour chaque autre noeud.

3. Procédé selon l'une des revendications précédentes, dans lequel une quantité de signaux d'état sont amenés vers l'unité de niveau supérieur pour déclencher une reconfiguration.

4. Procédé selon l'une des revendications précédentes, dans lequel une quantité de signaux d'état sont amenés vers l'unité de niveau supérieur pour transmettre un état à un graphe partiel non chargé dans la structure cellulaire.

5. Procédé selon l'une des revendications précédentes, dans lequel les graphes partiels sont répartis sur plusieurs blocs.

6. Procédé selon l'une des revendications précédentes, dans lequel les graphes sont décomposés en plusieurs graphes partiels d'une manière telle qu'il y a si possible peu de liaisons entre les graphes partiels.

7. Procédé selon l'une des revendications précédentes, dans lequel les graphes sont décomposés en plusieurs graphes partiels d'une manière telle que si possible peu de données sont transmises entre les graphes partiels.

8. Procédé selon l'une des revendications précédentes, dans lequel les graphes sont décomposés en plusieurs graphes partiels d'une manière telle qu'il n'y a si possible pas de rétro-couplages entre les graphes partiels.

9. Procédé selon l'une des revendications précédentes, dans lequel les graphes sont décomposés en graphes partiels d'une manière telle que les graphes partiels sont respectivement adaptés de façon si possible exacte aux ressources du bloc.

10. Procédé selon l'une des revendications précédentes, dans lequel on introduit, entre les graphes partiels, des éléments de mémoire pour sécuriser les données et les états.

11. Procédé selon l'une des revendications précédentes, dans lequel plusieurs chemins d'une instruction, dont exactement un est toujours réalisé en fonction de l'évaluation de l'instruction (IF, CASE), sont décomposés d'une manière telle que chaque chemin donne un graphe partiel.
